(19)

Europäisches Patentamt
European Patent Office
Office européen des brevets

(11) **EP 3 851 836 A1**

(12) **EUROPEAN PATENT APPLICATION**
published in accordance with Art. 153(4) EPC

(43) Date of publication:
**21.07.2021 Bulletin 2021/29**

(21) Application number: **19860568.5**

(22) Date of filing: **11.09.2019**

(51) Int Cl.:
*G01N 21/65* [(2006.01)]   *G01N 21/41* [(2006.01)]

(86) International application number:
**PCT/JP2019/035765**

(87) International publication number:
**WO 2020/054780 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **12.09.2018   JP 2018170543**

(71) Applicant: **Oji Holdings Corporation**
**Chuo-ku**
**Tokyo 104-0061 (JP)**

(72) Inventors:
• **SHINOTSUKA Kei**
**Tokyo 104-0061 (JP)**

• **SHEN Lingfeng**
**Tokyo 104-0061 (JP)**
• **DAI Kotaro**
**Tokyo 104-0061 (JP)**
• **TOKUNO Hisako**
**Tokyo 104-0061 (JP)**
• **HONGO Koki**
**Tokyo 104-0061 (JP)**
• **ENDO Eriko**
**Tokyo 104-0061 (JP)**

(74) Representative: **Zacco GmbH**
**Bayerstrasse 83**
**80335 München (DE)**

(54) **ANALYSIS SUBSTRATE**

(57)    This analytical substrate is provided with a substrate (10) of which at least a first surface (10a) comprises a dielectric or a semiconductor, and a metal film (20) which is provided on the first surface (10a) of the substrate (10), and which includes protruding portions (21) and protruding portions (22), wherein: the height of apex portions (21a) of the protruding portions (21) is the height of a peak that is the greatest distance from the substrate (10) in the surface height distribution of the metal film (20); the height of apex portions (22a) of the protruding portions (22) is the height of a peak that is the next greatest distance from the substrate (10) in the surface height distribution of the metal film (20); and the average value of the width of the protruding portions (22) excluding groove regions (H3), in which the height of the peak is the smallest distance from the substrate (10) is at most equal to 200 nm.

FIG. 1

**Description**

Technical Field

The present invention relates to an analytical substrate.

The present application claims priority to JP 2018-170543 filed on September 12, 2018, the contents of which are incorporated by reference herein.

Background Art

Conventionally, Raman spectroscopy is plagued by an extremely low intensity of Raman scattering light. To address this, utilization of Surface Enhanced Raman Scattering (SERS) is under study. SERS is a phenomenon in which the intensity of Raman scattering light of measurement target molecules absorbed on surfaces of metals such as Au and Ag, is largely enhanced due to electric field enhancement by surface plasmon resonance. The electric field enhancement by surface plasmon resonance is also studied to be used in optical analysis method other than the Raman spectroscopy, such as infrared absorption spectroscopy and fluorescence spectroscopy.

Examples of proposed analytical substrates utilizing electric field enhancement by surface plasmon resonance include the following.

(1) A signal amplifier apparatus for Raman spectroscopic analysis including a base having a nano periodical structure generating surface plasmon resonance in which a plurality of recesses or a plurality of projections are arranged in a lattice pattern at a predetermined lattice interval, and a metal coating formed on a surface of the nano periodical structure (Patent Document 1).

(2) An electric field enhancement element including a metal layer, a dielectric layer provided on the metal layer, and a plurality of metal particles provided on the dielectric layer, in which the metal particles has a periodic array capable of exciting propagating surface plasmon that propagates at an interface between the metal layer and the dielectric layer, the propagating surface plasmon and localized surface plasmon excited by the metal particles electromagnetically interact, these surface plasmons have different resonance wavelengths, full width at half maximum of a first absorption region and full width at half maximum of a second absorption region, in a spectrum of reflected light when the electric field enhancement element is irradiated with white light, satisfy a specific relationship, and the wavelength of excitation light for the electric field enhancement element is included in the range of the second absorption region (Patent Document 2).

Citation List

Patent Literature

Patent Document 1: Japanese Unexamined Patent Application Publication No. 2015-232526A

Patent Document 2: Japanese Unexamined Patent Application Publication No. 2015-212626A

Summary of Invention

Technical Problem

Unfortunately, the analytical substrates according to (1) and (2) may not be sensitive enough.

The apparatus disclosed in Patent Document 1 has an advantage in that variation of the electric field distribution on the nano periodical structure is small due to the use of the propagating surface plasmon, but also has a disadvantage in that the enhancement effect is limited because the electric field enhancement relies only on the propagating surface plasmon.

On the other hand, the electric field enhancement element disclosed in Patent Document 2 uses a combination of the propagating surface plasmon and localized surface plasmon. Specifically, the propagating surface plasmon contributes to the uniform electric field distribution, and the localized surface plasmon contributes to the enhancement of the electric field. Thus, advantages of the propagating surface plasmon and the localized surface plasmon can be combined, so that the uniformity and enhancement can both be achieved to some extent. Still, there is a disadvantage in that the measurement target molecule of the specimen cannot approach the metal film surface where the electric field enhancement effect by the propagating surface plasmon is the highest, because a dielectric layer is provided between the metal layer and the metal particles. Furthermore, the metal particles are arranged in an arrangement required for exciting the propagating surface plasmon and this leads to another disadvantage. Specifically, the distance between the particles in such an arrangement is much larger than the gap between the metal particles for the localized surface plasmon achieving high electric field enhancement effect.

An object of the present invention is to provide an analytical substrate enabling optical analysis exploiting electric field enhancement by surface plasmon resonance, to be implemented with high sensitivity.

Solution to Problem

The present invention has the following aspects.

[1] An analytical substrate includes a base including at least a first surface made of a dielectric or a semiconductor, and a metal film provided on the first surface of the base, in which the metal film has a recess and protrusion structure including a plurality of protrusions being continuously or intermittently formed, a surface height distribution of a side provided with the metal film includes three or more peaks, and when, of the three or more peaks, a peak with a largest distance from the base is referred to as a first height peak, a peak with a second largest distance from the base is referred to as a second height peak, and a peak with a shortest distance from the base is referred to as a groove peak, and when, of the plurality of protrusions, a protrusion with a top portion at a height of the first height peak is referred to as a first protrusion, a protrusion with a top portion at a height of the second height peak is referred to as a second protrusion, and a region having a height of the groove peak is referred to as a groove region, the first protrusion is a protrusion having an island shape or a mountain shape, with an average value of a width of a portion excluding the groove region being 200 nm or less, and the groove region is provided between a circumference edge portion of the first protrusion and a circumference edge portion of the second protrusion or between the first protrusion and the second protrusion.

[2] The analytical substrate according to [1], in which a difference between a mode height of the first height peak and a mode height of the second height peak is 5 to 60 nm.

[3] The analytical substrate according to [1] or [2], in which a difference between a mode height of the second height peak and a mode height of the groove peak is 5 to 40 nm.

[4] The analytical substrate according to any one of [1] to [3], in which a difference between a mode height of the first height peak and a mode height of the groove peak is 10 to 100 nm.

[5] The analytical substrate according to any one of [1] to [4] further including a plurality of metal nanoparticles dispersed on the metal film, in which an average primary particle size of the plurality of metal nanoparticles is 1 to 100 nm.

[6] The analytical substrate according to any one of [1] to [5], in which the first surface of the base has a substantially periodic recess and protrusion structure, a pitch of the substantially periodic recess and protrusion structure is 160 to 1220 nm, and a sheet resistance of a surface of the metal film at 25°C is $3.0 \times 10^\circ$ to $5.0 \times 10^4$ Ω/□.

Advantageous Effects of Invention

According to the present invention, it is possible to provide an analytical substrate capable of performing optical analysis using electric field enhancement by surface plasmon resonance, and in particular, analysis using Raman scattering light with high sensitivity.

Brief Description of Drawings

Fig. 1 is a cross-sectional view schematically illustrating an analytical substrate according to one embodiment of the present invention.
Fig. 2 is a diagram for explaining a method for determining an average value of a width of a first protrusion region.
Fig. 3 is a process diagram schematically illustrating a manufacturing process of the analytical substrate in Fig. 1.
Fig. 4 is a cross-sectional view schematically illustrating an analytical substrate according to a second modified example of the present invention.
Fig. 5 is a cross-sectional view schematically illustrating an analytical substrate according to a third modified example of the present invention.
Fig. 6 is a top view schematically illustrating a base surface of the analytical substrate according to the third modified example of the present invention.

Fig. 7 is a perspective view schematically illustrating a base surface of the analytical substrate according to the third modified example of the present invention.

Fig. 8 is a scanning electron microscope image of a precursor of an analytical substrate of Comparative Example 1.

Fig. 9(a) is a diagram illustrating a surface height distribution of the analytical substrate of Comparative Example 1, and Fig. 9(b) is a moving average curve thereof.

Fig. 10 is a scanning electron microscope image of an analytical substrate of Example 1.

Fig. 11(a) is a diagram illustrating a surface height distribution of the analytical substrate of Example 1, and Fig. 11(b) is a moving average curve thereof.

Fig. 12 is a scanning electron microscope image of a precursor of an analytical substrate of Comparative Example 2.

Fig. 13(a) is a diagram illustrating a surface height distribution of a precursor of the analytical substrate of Comparative Example 2, and Fig. 13(b) is a moving average curve thereof.

Fig. 14 is a scanning electron microscope image of an analytical substrate of Example 2.

Fig. 15(a) is a diagram illustrating a surface height distribution of the analytical substrate of Example 2, and Fig. 15(b) is a moving average curve thereof.

Fig. 16 is a scanning electron microscope image of an analytical substrate of Example 3.

Fig. 17 is a diagram illustrating positions where a recess and protrusion structure of a base of Example 3 is reflected.

Description of Embodiments

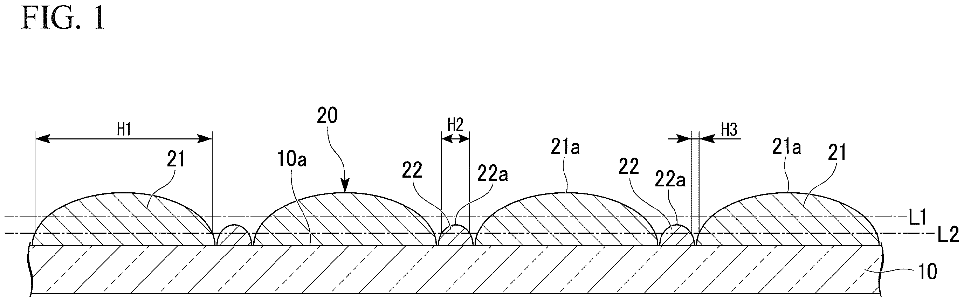

Fig. 1 is a cross-sectional view schematically illustrating an analytical substrate according to one embodiment of the present invention.

The analytical substrate of the present embodiment includes a base 10 and a metal film 20 provided on a first surface 10a of the base 10.

(Base)

At least the first surface 10a of the base 10 is made of a dielectric or a semiconductor.

The base 10 may be, for example, a base made of a dielectric or a semiconductor, and may be a multilayer base in which two or more layers of a conductor layer, a dielectric layer, and a semiconductor layer are laminated such that the first surface is formed to be a dielectric or a semiconductor. The dielectric or semiconductor is not particularly limited, and may be a known material in applications for an analytical substrate.

Typically, a base made solely of a dielectric or a semiconductor is typically used as the base 10. Examples of the base include: a base made of an inorganic material such as a quartz base, various glass bases such as alkaline glass and non-alkali glass, a sapphire base, a silicon (Si) base, and silicon carbide (SiC); and a base made of an organic material such as polymethylmethacrylate, polycarbonate, polystyrene, polyolefin resin, and polyester resin, and the like.

The thickness of the base 10 is not particularly limited and may be, for example, 0.1 to 5.0 mm.

(Metal film)

The metal constituting the metal film 20 may be any metal that can generate electric field enhancement by surface plasmon resonance. Examples of such a metal include gold, silver, aluminum, copper, platinum, alloys of two or more of these, combinations of two or more of these, and the like.

The metal film 20 has a recess and protrusion structure in which a plurality of protrusions 21 and a plurality of protrusions 22 are continuously or intermittently formed. The protrusion 21 corresponds to a first protrusion of the present invention and the protrusion 22 corresponds to a second protrusion of the present invention.

Note that the plurality of protrusions 21 and the plurality of protrusions 22 formed continuously means that there is no portion between the protrusions where the metal film 20 is interrupted, and the plurality of protrusions 21 and the plurality of 22 protrusions intermittently formed means that there is a portion between the protrusions where the metal film 20 is interrupted.

A groove region H3 is defined between a circumference edge portion (skirt portion) of the protrusion 21 and a circumference edge portion (skirt portion) of the protrusion 22, or between the protrusion 21 and the protrusion 22. When the plurality of protrusions 21 and the plurality of protrusions 22 are continuously formed, the circumference edge portion of the protrusion portion 21 and the circumference edge portion of the protrusion 22 is the groove region H3.

When the plurality of protrusions 21 and the plurality of protrusions 22 are formed intermittently, the groove region H3 further includes a portion between the protrusion 21 and the protrusion 22 where the metal film 20 is interrupted, in addition to the circumference edge portions of the protrusion 21 and the protrusion 22.

Note that in Fig. 1, the height of a top portion 21a, which is the highest position of the protrusion 21, is the same among the plurality of protrusions 21 but the protrusions 21 having variation to some extent may also be applicable.

Similarly, the height of a top portion 22a, which is the highest position of the protrusion 22, is the same among the plurality of protrusions 22 but the protrusions 22 having variation to some extent may also be applicable.

The heights of the top portions 21a of the protrusions 21 and the heights of the top portions 22a of the protrusions 22 each may be acceptable to have variations, but any of the top portions 21a is at a higher position, that is, at a longer distance from the base 10 than any of the top portions 22a.

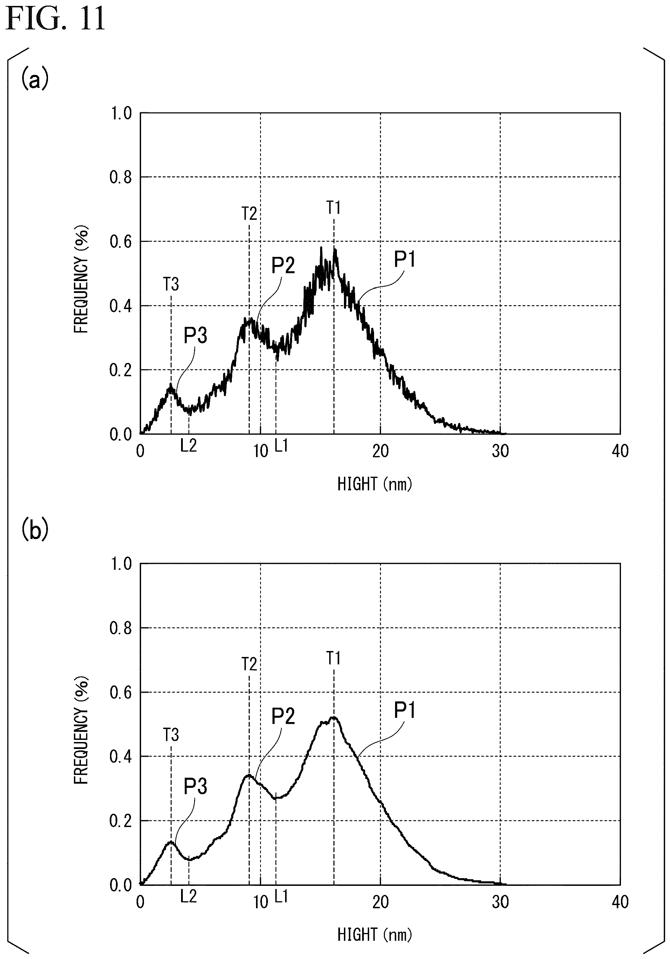

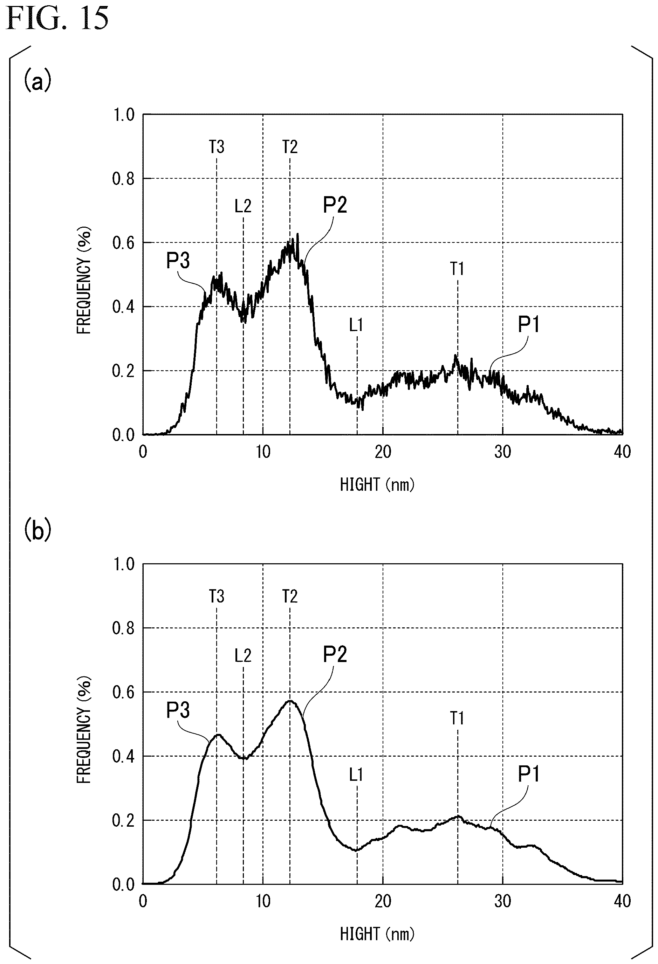

In the analytical substrate of the present embodiment, the moving average curve (n = 15) of the surface height distribution on a side provided with the metal film 20, which is determined by an atomic force microscope (AFM) (sampling interval: 0.6 nm), includes three peaks, as illustrated in Figs. 11(b) and 15(b) obtained in the examples described below.

To determine the moving average curve, first of all, as illustrated in Fig. 11(a) and Fig. 15(a), raw data about a frequency is obtained at an interval of 0.6 nm in the height direction. Then, the moving average curve that is the moving average of the 15 pieces of raw data is obtained as illustrated in Fig. 11(a) and Fig. 15(a).

The number of peaks in the moving average curve is counted without counting the peaks having full width at half maximum not exceeding 2 nm among up-down of the moving average curve.

When there are three peaks as illustrated in Fig. 11(b) and Fig. 15(b), the peak at the longest distance from the base 10 (the peak at the highest position) is defined as a peak P1 that is a first height peak of the present invention, the peak with the second longest distance is defined as a peak P2 that is a second height peak of the present invention, and the peak with the shortest distance from the base 10 (the peak at the lowest position) is defined as a peak P3 that is a groove peak of the present invention.

A mode height T1, a mode height T2, and a mode height T3 are heights which are the modes in the peak P1, peak P2, and peak P3, respectively. The mode height T1, the mode height T2, and the mode height T3 each may be in peaks with full width at half maximum not exceeding 2 nm that are not counted when the number of peaks is counted.

A height level L1 is a height at which the frequency in the surface height distribution is the lowest between the mode height T1 and the mode height T2. A height level L2 is a height at which the frequency in the surface height distribution is the lowest between the mode height T2 and the mode height T3. The height level L1 and the height level L2 may be between peaks with full width at half maximum not exceeding 2 nm that are not counted when the number of peaks is counted.

The height level L1 serves as the boundary between the peak P1 and the peak P2, and height level L2 serves as the boundary between the peak P2 and the peak P3.

The exact height of the height level L1 is included in the peak P1 and the exact height of the height level L2 is included in the peak P2.

The mode height T1 is preferably 10 to 100 nm, and is more preferably 10 to 50 nm. The mode height T2 is preferably 5 to 42 nm, and is more preferably 5 to 30 nm. The mode height T3 is preferably 2 to 12 nm, and is more preferably 2 to 10 nm.

The height level L1 is preferably 7 to 40 nm, and is more preferably 10 to 25 nm. The height level L2 is preferably 3 to 25 nm, and is more preferably 3 to 15 nm.

Under these conditions, T1 > L1 > T2 > L2 > T3 also holds.

The difference between the mode height T1 and the mode height T2 is preferably 5 to 60 nm, and is more preferably 7 to 25 nm. The difference between the mode height T2 and the mode height T3 is preferably 5 to 40 nm, and is more preferably 5 to 15 nm. The difference between the mode height T1 and the mode height T3 is preferably 10 to 100 nm, is more preferably 10 to 98 nm, and is even more preferably 10 to 30 nm.

In the present invention, the protrusion with the top portion having the height at the first height peak is referred to as the first protrusion. Thus, the heights of the top portions 21a of the protrusions 21 as the first protrusions have a height distribution expressed by the peak P1 corresponding to the height position at or higher than the height level L1.

In the present invention, the protrusion with the top portion having the height at the second height peak is referred to as the second protrusion. Thus, the heights of the top portions 22a of the protrusions 22 as the second protrusions are within a range of the height distribution expressed by the peak P2 corresponding to the height position at or higher than the height level L2 and lower than the height level L1.

In the present invention, a region with the height of a groove peak is referred to as a groove region. Thus, the groove region H3 is within a range of the height distribution expressed by P3 at or lower than the height level L2.

Note that a measurement value obtained by the AFM not only reflects the thickness of the metal film 20, but also reflects original properties of the base 10 such as warpage, distortion, and slight unevenness, due to a fine resolution in the height direction being 1 nm or less. Thus, the height distribution obtained by the AFM also includes a variable factor of the first surface 10a which is different from an ideal plane.

In the height distribution obtained by the AFM, the height distribution of the groove region H3 is an apparent height distribution that is reflecting but not matching the actual height distribution.

Therefore, the mode height T3 is also an apparent numerical value obtained by the AFM measurement, and is not the actual mode height (depth) of the groove region H3.

Reasons why the value does not match the actual height distribution include the limitation of the measurement based on the AFM probe.

Specifically, the width near the bottom of the groove region H3 may be very narrow, such as, for example, 5 nm or less. Thus, the tip of the AFM probe lowered from the above may fail to reach the lowest point in the groove region H3, that is, the probe is caught at a middle of the groove structure with a gradually decreasing width, at a height where the width of the tip of the probe becomes equal to the width of the groove, and cannot be lowered any further.

In such cases, a height of the position detected by AFM is higher than the actual height.

Measurement by a transmission electron microscope (TEM) may be employed as a measure for accurately obtaining the height (depth) of the groove region H3. However, measurement using TEM takes time and cost for sample conditioning and the like. Thus, it is practically difficult to constantly measure the number of points enabling statistical processing using TEM.

Observation measures with which a resolution of 1 nm or finer can be achieved, such as a helium ion microscope, do exist but such apparatuses are not yet readily accessible.

All things considered, the present inventors have decided to use the method using AFM as a reference of the length measurement measures for the height distribution or the like in the present invention.

The height (depth) of the lowest (deep) point of the groove region H3 reachable by the AFM probe depends on the width of the tip of the AFM probe. In the present invention, the present inventors have decided to use an AFM probe (such as Super Sharp Silicon Force Modulation Mode SSS-FMR-10, manufactured by Nano World AG) with specification including a tip diameter being smaller than 2 to 5 nm; and a tip angle from the tip to a 200 nm point being smaller than 20°.

The observation range by AFM is set to be □500 nm, the scanning rate is set to be 0.3 to 1.0 Hz, and the sampling rate is set to be $256 \times 256$ to $512 \times 512$ pixels.

Thus, the surface height distribution is obtained in three □500 nm observation ranges, and the average of the distributions in the three ranges is obtained as "the surface height distribution on the side provided with the metal film" of the present invention.

The difference between the mode height T1 of the peak P1 (the mode height of the first height peak) and the mode height T2 of the peak P2 (the mode height of the second height peak) is preferably 5 to 60 nm, and more preferably 7 to 25 nm.

The difference between the mode height T1 and the mode height T2 reflects the mode of the difference between the heights of the protrusions 21 and the protrusions 22. The difference between the mode height T1 and the mode height T2 within the range described above is preferable because it enables the groove structure H3 to be easily formed.

The difference between the mode height T2 of the peak P2 (the mode height of the second height peak) and the mode height T3 of the peak P3 (the mode height of the groove peak) is preferably 5 to 40 nm, and more preferably 5 to 15 nm.

The difference between the mode height T2 and the mode height T3 is an apparent difference in height between the protrusion 22 and the groove region obtained by the AFM measurement, and somewhat reflects the thickness of the metal film 20 at the protrusion 22. The difference between the mode height T2 and the mode height T3 within the range described above is preferable because it facilitates clear forming of the groove region H3.

The difference between the mode height T1 of the peak P1 (the mode height of the first height peak) and the mode height T3 of the peak P3 (the mode height of the groove peak) is preferably 10 to 98 nm, and more preferably 10 to 30 nm.

The difference between the mode height T1 and the mode height T3 is an apparent difference in height between the protrusion 21 and the groove region obtained by the AFM measurement, and somewhat reflects the thickness of the metal film 20 at the protrusion 21. The difference between the mode height T1 and the mode height T3 within the range described above is preferable because it facilitates clear forming of the groove region H3.

The protrusion 21 serving as the first protrusion is a portion excluding the groove region H3 in its circumference edge portion, that is, a portion of the protrusion 21 being higher than the height level L2 and appearing as an island or mountain shaped region (hereinafter, referred to as "first protrusion region H1").

The protrusion 22 serving as the second protrusion is a portion excluding the groove region H3 in its circumference edge portion, that is, a portion of the protrusion 22 being higher than the height level L2 and appearing as an island or mountain shaped region (hereinafter, referred to as "second protrusion region H2").

The average value of the width of the first protrusion region HI (hereinafter, sometimes referred to simply as "average width") is not greater than 200 nm.

When the first protrusion region HI has an island shape, the average width is preferably 180 nm or less, is more preferably 5 to 130 nm, and is even more preferably 10 to 80 nm.

When the first protrusion region HI has a mountain shape, the average width is preferably 150 nm or less, is more preferably 5 to 100 nm, and is even more preferably 10 to 60 nm.

When the average width is less than or equal to 200 nm, or less than or equal to the preferable upper limit value, the frequency of the presence of the groove region H3 is increased, and sufficient localized surface plasmon effect is easily obtained.

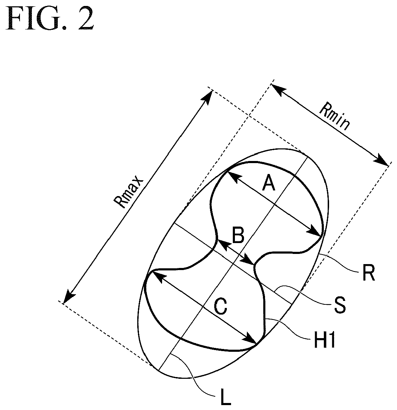

Whether the first protrusion region HI has a mountain shape or an island shape is defined using a long diameter Rmax and a short diameter Rmin of an ellipse (hereinafter, referred to as "circumscribed ellipse") R with the minimum area which is drawn as circumscribing a determination target region as illustrated in Fig. 2, and using lengths W1 (A, B, C, and the like in Fig. 2) of lines orthogonal to the long axis L and extending across the region. How to deal with a large first protrusion region H1 for which the circumscribed ellipse cannot be set within the acquired AFM image will be described later.

It is assumed that when the circumscribed ellipse can be set, the mountain shape is obtained in the following cases, and otherwise the island shape is obtained.

- Case where 4 < Rmax/Rmin holds.- Case where 3 < Rmax/Rmin ≤ 4 holds and a portion where W1 is no larger than 40% of Rmin is no less than 60% of the range of the long axis L.- Case where 2 < Rmax/Rmin ≤ 3 holds and a portion where W1 is no larger than 30% of Rmin is no less than 60% of the range of the long axis L.- Case where 1 < Rmax/Rmin ≤ 2 holds and a portion where W1 is no larger than 20% of Rmin is no less than 60% of the range of the long axis L.

For a large first protrusion region H1 for which the circumscribed ellipse cannot be set within the obtained AFM image, an ellipse with the largest area inscribed in the determination target region (hereinafter referred to as an "inscribed ellipse") is drawn. Then, when a portion where the a length W2 of a line orthogonal to the long axis and extending across the region is 20% or less of the short diameter of the inscribed ellipse is not smaller than 60% of the range of the long axis, the region is determined to have the "mountain shape", and otherwise the region is determined to have an island shape.

Regardless of whether the first protrusion region HI is an island shape or a mountain shape, the first protrusion regions HI crossed by any of two diagonal lines drawn in the acquired AFM image are the measurement targets for which the average width is obtained. Among these first protrusion regions H1, five first protrusion regions HI closest ones to the intersection between the diagonal lines are picked up as the targets. If the number of first protrusion regions HI for the measurement in one AFM image is less than five, the same operation is performed on an AFM image acquired at a different portion in the same sample surface. Thus, the AFM image is increased until the number of regions reaches five. The widths of the five selected first protrusion regions HI are averaged to obtain the average value (average width) of the widths of the portions of the first protrusions excluding the groove region in the present invention.

The width of the first protrusion region HI having an island shape is determined as the average value of local maximum values and local minimum values of W1 or W2. If there are more than one local maximum and local minimal values, all of such local maximum and local minimum values are averaged.

For example, in case in which the first protrusion region HI has an island shape illustrated in Fig. 2, the width of the first protrusion region HI is obtained as an average value (A + B + C)/3, where A and C are local maximum values of W1 and B is a local minimum value of W1.

The width of the first protrusion region HI having a mountain shape is defined using a length W3 of a line, which is orthogonal to a center curve, crossing the region.

Here, the center curve is a curve drawn inside the first protrusion region HI. The curve is made up of given points. The given points are selected to satisfy the following condition. Specifically, with respect to a tangent line of the curve at the given point on the curve, the distances, from the given point to two points where the contour line of the first protrusion region HI intersects the extension of the straight line passing through the given point while the straight line is orthogonal to the tangent line, are the same.

The width of the first protrusion region HI having a mountain shape is obtained as follows. Specifically, first of all, a portion in the first protrusion region HI where W3 becomes the largest is identified. Then, W3 is measured from the portion, as a starting point, at a 20 nm interval along the center curve on both sides of the portion. Then, all the values of W3 including the largest one obtained at the starting point are averaged to obtain the width of the first protrusion region HI. When the first protrusion region HI extends over a long distance, 25 values of W3 are measured one by one starting closer from the largest W3 including maximum W3 obtained at the starting point.

When the largest W3 obtained at the starting point exceeds 150% of the width at a position separated by 20 nm therefrom along the center curve on both sides, the portion as the starting point is determined as a branch part branched from the main part, and the portion where the next maximum W3 is obtained is newly set to be the starting point.

The branch part is defined with a branch point being an intersection between the center curve of the branch part and the center curve of the main part. A portion where the length of W3 is measured in the branch part is a portion where the distance from the position of the starting point where the largest W3 is obtained (a sum of the distance from the position of the starting point where the largest W3 is obtained to the branch point along the center curve of the main part and the distance from the branch point in a direction toward the tip of the branch along the center curve of the branch part) is an integer multiple of 20 nm.

Also in a case where there is the branch part, the values of W3 are averaged to obtain the width of the first protrusion region H1, when up to 25 values of W3 are measured one by one starting closer from the largest W3 including maximum W3 obtained at the starting point.

An average width of the first protrusion region HI can be approximately obtained based on an SEM image instead of the AFM image. For example, the value can be obtained by acquiring an SEM image at x 100000 magnification (910 nm × 1210 nm), selecting five any first protrusion regions HI intersecting with any of the two diagonal lines drawn in the acquired SEM image as measurement targets, same as with the case that is based on the AFM image.

Methods for determining whether the region has a mountain shape or an island shape, and for obtaining the average width for each of the shapes are the same as those with the case that is based on the AFM image.

However, with the SEM image, the position of the contour line of the first protrusion region HI defined by the position at the height level L2 cannot be detected. Thus, in case based on the SEM image, the center of the groove region H3 observed around the first protrusion region HI is used as an approximate contour line of the first protrusion region HI for convenience.

Due to the extremely narrow width of the groove region H3, the average width obtained based on the SEM image thus using the approximation is substantially the same as the average width based on the AFM image.

The groove region H3 preferably includes a portion with a width of 0.1 to 25 nm, more preferably includes a portion with a width of 0.1 nm to 15 nm, and even more preferably includes a portion with the width of 0.1 to 7 nm or less.

Sufficient localized surface plasmon effect is more likely to be achieved as a width of the groove region H3 is smaller.

To accurately determine the width of the groove region H3, the width is measured using a transmission electron microscope (TEM).

The groove region H3 may include a no-film formed region where the metal film 20 is absent and the base 10 is exposed.

When the no-film formed region is provided, the metal films 20 face each other with the non-film formed region provided in between. When the width of the no-film formed region is extremely small, which is in an order of nanometers or several tens of nanometers, for example, an enhanced electric field can be generated between the metal films 20 facing each other with the no-film formed region in between, due to the superposition of electric fields by the localized surface plasmon. In particular, extremely high electric field enhancement effect can be achieved when the width of the no-film formed region does not exceed 10 nanometers.

The width of the no-film formed region is preferably 0.1 to 15 nm, more preferably 0.1 to 10 nm, and even more preferably 0.1 to 2 nm. With a width in these ranges, excellent electric field enhancement effect is obtained by the localized surface plasmon resonance.

When the width of the groove region H3 is small, the sheet resistance of the surface of the metal film 20 at 25°C tends to be low. Thus, the sheet resistance of the surface of the metal film 20 at 25°C is smaller the better. Specifically, it is preferably 3 to 200 $\Omega/\square$ and is more preferably 10 to 150 $\Omega/\square$.

(Operation and effect)

The analytical substrate of the present embodiment includes circumference edge portions of a plurality of protrusions of the metal film 20 and the groove region formed in the gaps therebetween. Thus, localized surface plasmon resonance occurs between each adjacent protrusions by incident light, and the non-linear optical electric field enhancement effect can be obtained by the superimposition of electric fields. When this effect is used for spectroscopy measurement, a signal from the measurement target molecules can be increased, whereby measurement sensitivity can be improved.

(Method of manufacturing analytical substrate)

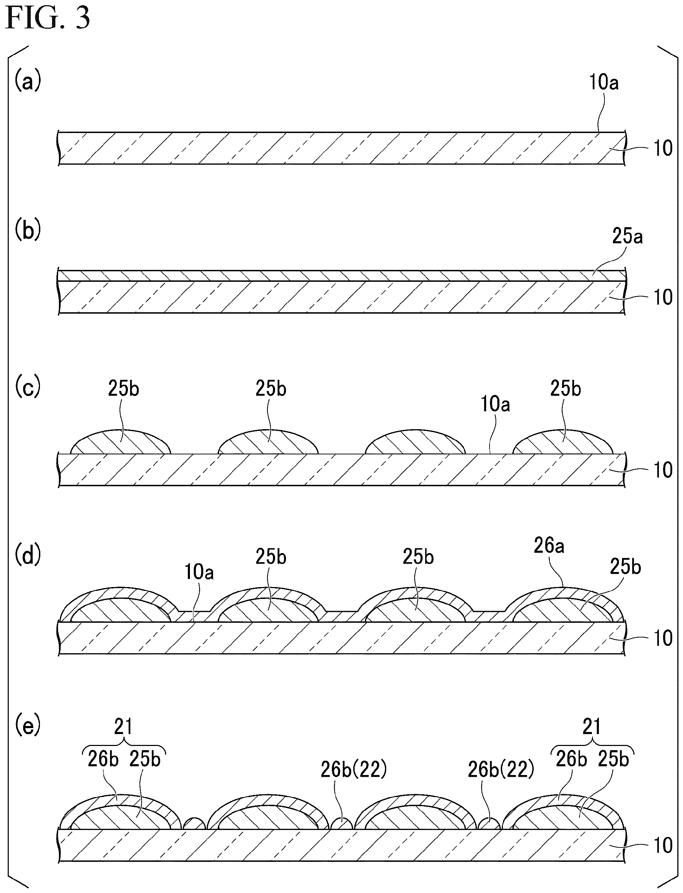

An example of a method of manufacturing the analytical substrate illustrated in Fig. 1 includes a manufacturing method including the following (i) to (iv) that are sequentially performed as illustrated in Fig. 3.

(i) First film formation step

This is a step of film formation of a flat metal film 25a (Fig. 3(b)) by layering metal on the first surface 10a of the base 10 (Fig. 3(a)).

(ii) First heating step

This is a step of heating the metal film 25a to obtain a plurality of metal films 25b cohered by being heated as the precursor of the analytical substrate (Fig. 3(c)).

(iii) Second film formation step

This is a step of layering a metal film 26a with a uniform thickness, over the entirety of the cohered metal films 25b and portions where the first surface 10a of the base 10 is exposed due to the cohesion of the metal film 25a (Fig. 3(d)).

(iv) Second heating step

This is a step of heating the metal film 26a to obtain a plurality of metal films 26b cohered by being heated as the analytical substrate (Fig. 3(e)).

As illustrated in Fig. 3(e), a portion where the metal film 26b is layered on the metal film 25b serves as the protrusion 21, and a portion where the metal film 26b is directly layered on the base 10 serves as the protrusion 22.

The technique for layering metal on the first surface 10a in the first film formation step is not particularly limited. Examples of such a technique include a dry method such as a vapor deposition method, a wet method such as electrolytic plating or electroless plating, or the like. Examples of the dry method include physical vapor deposition (PVD) such as various types of vacuum sputtering and vacuum vapor deposition, various types of chemical vapor deposition (CVD), and the like.

Of these, physical vapor deposition (PVD) such as vacuum sputtering or vacuum vapor deposition is preferable because the technique enables the thickness to be easily controlled, is less likely to involve the deposition of impurities, and can achieve high adhesion strength of the metal film to the base. In other words, the metal film 25a is preferably a film formed by sputtering.

The thickness of the metal film 25a formed by the first film formation step is preferably 2 to 60 nm, and more preferably 3 to 30 nm, and even more preferably 4 to 15 nm.

The thickness of the metal film 25a is preferably equal to or greater than the preferable lower limit values, so that spacing in the island structure or mesh structure formed by the first annealing step would not be excessively large.

The thickness of the metal film 25a is preferably equal to or smaller than the preferable upper limited values, so that in the first annealing step, the metal film 25a is segmented by dewetting and then is cohered to form the island structure or the mesh structure.

In the first heating step, the metal film 25a is cohered by heating, so that the analytical substrate precursor is obtained.

Generally, metals including gold, silver, aluminum, copper, platinum, and the like have characteristics in which surface free cohesive energy in the molten state is high/low. Thus, when a thin film of such metal is heated up to the melting point or higher, segmentation of the film in a liquid phase due to the dewetting phenomenon and the following minimization (cohesion) of specific surface area due to the surface free energy are likely to occur.

The dewetting phenomenon is likely to occur when the difference between the surface free energy of the metal in the molten state and the surface free energy of a material to be the base is large. In the case of the present invention, the surface free energy of the base 10 is sufficiently lower than the surface free energy of the molten metal, and thus the dewetting phenomenon occurs when the heating temperature reaches the melting point of the metal or higher.

In the case of the present invention, the melting point of the metal is lower than that of the metal in the bulk state due to a depression of melting point phenomenon. Specifically, metals have a properties such that metal particles with a smaller particle size and a metal thin film with a smaller thickness have a lower melting point. The depression of melting point phenomenon is prominent when the particle size of metal particle and the film thickness of a metal thin film reaches several tens of nanometers. The depression of melting point is particularly prominent with a metal thin film manufactured by vacuum sputtering or vacuum vapor deposition, because the obtained metal thin film is an aggregation of metal atoms or extremely fine metal particles and thus has a density lower than that in the bulk state. For example, the melting point of gold in the bulk state is 1064°C, but the melting point drops to around 150 to 200°C when gold is formed into a thin film with a film thickness of 10 nm or smaller by vacuum sputtering.

The heating temperature in the first heating step differs depending on the type of metal. When gold is used for the metal film 25a, the heating temperature is preferably 100 to 600°C and is more preferably 200 to 400°C. When silver is used for the metal film 25a, the heating temperature is preferably 80 to 600°C, and is more preferably 200 to 400°C.

The heating time in the first heating step differs depending on the type of metal and the heating temperature. For example, when gold is used for the metal film 25a, and the heating temperature is 300°C, the heating time is preferably 1 to 60 minutes, and is more preferably 3 to 20 minutes. When silver is used for the metal film 25a and the heating temperature is 280°C, the heating time is preferably 1 to 50 minutes, and is more preferably 3 to 18 minutes.

With a higher heating temperature or with a longer heating time, the dewetting and cohesion are more facilitated, and thus the plurality of metal films 25b are more likely to be formed into independent island shaped protrusions. With a lower heating temperature or with a shorter heating time, the dewetting and cohesion are less facilitated, and the plurality of metal films 25b are likely to be formed into the protrusions having a mountain shape.

As a result of the cohesion, the portion where the first surface 10a of the base 10 is exposed is formed between the metal films 25b.

As a heating measure in the first heating step, heating by direct heat source such as an oven (including a muffle furnace, an electric furnace, a furnace, and the like), a hot plate, or an infrared heating apparatus is effective, but other heating measures may also be employed.

The first heating step is performed in an atmosphere of inert gas such as argon or nitrogen. This is because when the first heating step is performed with a particular type of metal such as silver in the air, the metal is oxidized by the oxygen in the air, and thus effect of the surface plasmon resonance is reduced.

In the second film formation step, the metal film 26a with a uniform thickness is layered over the entirety of the cohered metal films 25b and portions where the first surface 10a of the base 10 is exposed due to the cohesion of the metal film 25a.

The material of the metal film 26a may be different from that of the metal film 25b.

In the second film formation step, the method for layering the metal is not particularly limited, and a method similar to that in the first film formation step can be employed. The preferred layering method is also similar to that in the first film formation step.

The thickness of the metal film 26a formed by the second film formation step is preferably 2 to 60 nm, and more preferably 3 to 30 nm, and even more preferably 4 to 15 nm.

The thickness of the metal film 26a is preferably equal to or greater than the preferable lower limits, so that the protrusions 22 formed by the metal films 26b can be formed to have a sufficient height after the second heating step.

The thickness of the metal film 26a is preferably equal to or smaller than the preferable upper limits, so that the groove structure H3 can be formed by the segmentation of the metal film 25b by the dewetting in the second heating step.

In the second heating step, the metal film 26a is heated so that the segmentation of the metal film and the following cohesion due to the surface free energy occur. And thus, the analytical substrate including a metal recess and protrusion structure body illustrated in Fig. 3(e) is obtained. In the second heating step, a heating condition enabling the above described morphological change in the metal film 26a by heating is employed. Such a condition is preferably tailored so as not to cause displacement or further cohesion of the metal film 25b that has already been cohered.

In practice, the metal film 26a needs to be heated up to a melting point or higher, and thus the metal film 25b that has already been formed cannot be completely free of an impact of such a process. Still, a change in the position or the morphology of the metal film 25b is preferably suppressed to be small as much as possible. As a specific counterplan to achieve this, in particular, the heating temperature lower than the heating temperature in the first heating step is preferably used.

The heating temperature in the second heating step differs depending on the type of metal. When gold is used for the metal films 25 and 26a, the heating temperature is preferably 50 to 400°C and is more preferably 90 to 250°C. When silver is used for the metal films 25a and 26a, the heating temperature is preferably 40 to 400°C, and is more preferably 70 to 250°C.

The heating time in the second heating step differs depending on the type of metal and the heating temperature. For example, when gold is used for the metal films 25a and 26a, and the heating temperature is 150°C, the heating time is preferably 2 to 60 minutes, and is more preferably 3 to 20 minutes. When silver is used for the metal films 25a and 26a and the heating temperature is 140°C, the heating time is preferably 2 to 60 minutes, and is more preferably 3 to 18 minutes.

As a heating measure in the second heating step, heating by direct heat source such as an oven (including a muffle furnace, an electric furnace, a furnace, and the like), a hot plate, or an infrared heating apparatus is effective, but other heating measures may also be employed.

The second heating step is performed in an atmosphere of inert gas such as argon or nitrogen. This is because when the second heating step is performed with a particular type of metal such as silver in the air, the metal is oxidized by the oxygen in the air, and thus effect of the surface plasmon resonance is reduced.

First Modified Example

In the example described in the above embodiment, the surface height distribution on the side provided with the metal film includes three peaks, but the number of peaks may be any number that is not smaller than three. The number of peaks is preferably equal to or smaller than five, is more preferably three or four, and is particularly preferably three for the sake of stable manufacturing.

A method to obtain the number of peaks to be four or more includes (v) third film formation step and (vi) third heating step, which is additionally provided after (i) first film formation step, (ii) first heating step, (iii) second film formation step, and (iv) second heating step described above, for example. These (v) third film formation step and (vi) third heating step may be steps similar to (iii) second film formation step and (iv) second heating step.

Second Modified Example

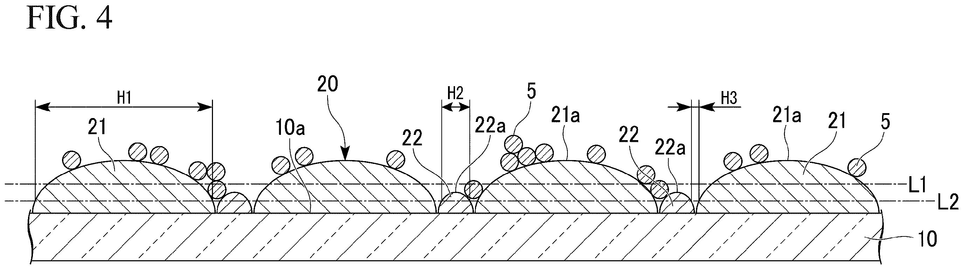

In the embodiment and the first modified example as described above, metal nanoparticles 5 may be further dispersed on the metal film 20 as illustrated in Fig. 4.

The metal nanoparticles can be dispersed by preferably using measures such as spray coating, spin coating, dip coating, or drop casting. However, the measure is not limited to these as long as the gist of the present invention can be embodied.

When the metal nanoparticles are further dispersed on the metal film, the localized surface plasmon resonance by excitation light occurs and non-linear optical electric field enhancement effect can be obtained by superimposition of electric fields, also between the metal film and the metal nanoparticles and between each adjacent metal nanoparticles.

The metal constituting the metal nanoparticles may be any metal that can generate electric field enhancement by surface plasmon resonance. Examples of such a metal include gold, silver, aluminum, copper, platinum, alloys of two or more of these, and the like.

The shape of the metal nanoparticles is not particularly limited. Examples of the shape include spherical, needle shape (rod shape), flake shape, polyhedral, ring shape, hollow shape (with a cavity or dielectric provided at a center portion), dendritic crystal, other irregular shapes, and the like.

At least some of the plurality of metal nanoparticles may be cohered to form secondary particles.

The average primary particle size of the metal nanoparticles is preferably 1 to 100 nm, is more preferably 3 to 50 nm, and is even more preferably 5 to 30 nm. The average primary particle size of the metal nanoparticles within the ranges described above facilitates resonance between free electrons in the metal and excitation light, thereby achieving excellent electric field enhancement effect by localized surface plasmon resonance.

The average primary particle size of the metal nanoparticles is measured by a method by measuring the primary particle size of the metal nanoparticles directly by scanning electron microscopy (SEM) and obtaining the average value of the primary particle sizes. In this case, to learn the average state, n = 20 average values or more are obtained.

In the above method, for the sake of convenience, a transmission electron microscope (TEM) or an atomic force microscope (AFM) may be used instead of the SEM. Also with these microscopes, similar results can be obtained.

The average primary particle size of the metal nanoparticles may be measured by a particle size distribution meter using dynamic light scattering, for convenience. In this case, when there are secondary particles (aggregation of the cohered primary particles), the particle size distribution curve would include a plurality of peaks, and the peak with the smallest particle size is determined as the target particle size. Also with this configuration, a result similar to that obtained by the measurement method using the SEM as described above can be obtained.

The measurement using microscopic measures such as SEM is useful for analyzing the surface of an analytical substrate after the analytical substrate has been prepared as a product. The measurement method using the dynamic light scattering is useful in the manufacturing of the analytical substrate.

The shortest distance between two adjacent metal nanoparticles spaced apart on the metal film is preferably 0.1 to 20 nm, is more preferably 0.1 to 10 nm, and is even more preferably 2 to 0.1 nm. If the shortest distance is within the ranges described above, an electric field enhancement is generated by the localized surface plasmon resonance between each of the metal nanoparticles, to enable highly sensitive spectroscopic analysis of the measurement target molecules attached between each of the metal nanoparticles. In particular, since Raman spectroscopic analysis method in which signal (Raman scattering light) from the measurement target molecules is weak, a sample with a low concentration can be analyzed thanks to the electric field enhancement. Furthermore, even if the metal nanoparticles are in contact with the metal film, there are created small gaps between the metal film and the metal nanoparticles around the contact points. Thus, electric field enhancement by the localized surface plasmon resonance is also generated in such a gap, to enable highly sensitive spectroscopic analysis.

The shortest distance between the two adjacent metal nanoparticles is measured by a method by capturing a microscope image of a sample on a surface of the analytical substrate including the two adjacent metal nanoparticles using a scanning electron microscope (SEM), and measuring the gap between two adjacent metal nanoparticles in the image. This method requires a magnification of approximately 100000 to 200000 times, and preferably approximately 500000 to 1000000 times. Since the shortest distances between two adjacent metal nanoparticles are locally different and not uniform, n = 20 or more measurements are performed to obtain the distance distribution.

The metal nanoparticles may be dispersed on the metal film by coating metal nanoparticle dispersion liquid in which the metal nanoparticles are dispersed and drying, after the metal film is formed to have the recess and protrusion structure by (i) first film formation step and (ii) first heating step, (iii) second film formation step and (iv) second heating step, and/or (v) third film formation step and (vi) third heating step described above.

Any dispersion medium with which the metal nanoparticles 5 can be dispersed may be used for the metal nanoparticle dispersion liquid. Examples of such a dispersion medium include water, ethanol, other organic solvents, and the like.

The content of the metal nanoparticles 5 in the metal nanoparticle dispersion liquid may be, for example, 0.01 to 10.0% by mass or 0.1 to 1.0% by mass of the total mass of the metal nanoparticle dispersion liquid.

The metal nanoparticle dispersion liquid may further include citric acid, various inorganic salts, and the like as a dispersion stabilizer as appropriate without impairing the effect of the present invention. Furthermore, the dispersion may be stabilized using an organic compound including a thiol (-SH) group at an end as a surfactant.

The method of coating the metal nanoparticle dispersion liquid is not particularly limited, and can be appropriately selected from known coating methods such as spraying, drop casting, dip coating, spin coating, ink jet printing, and the like for example. The spraying or ink-jet printing is preferable because it features spraying of the metal nanoparticle, enabling the metal nanoparticles to be disposed on the surface of the analytical substrate densely and uniformly.

Third Modified Example

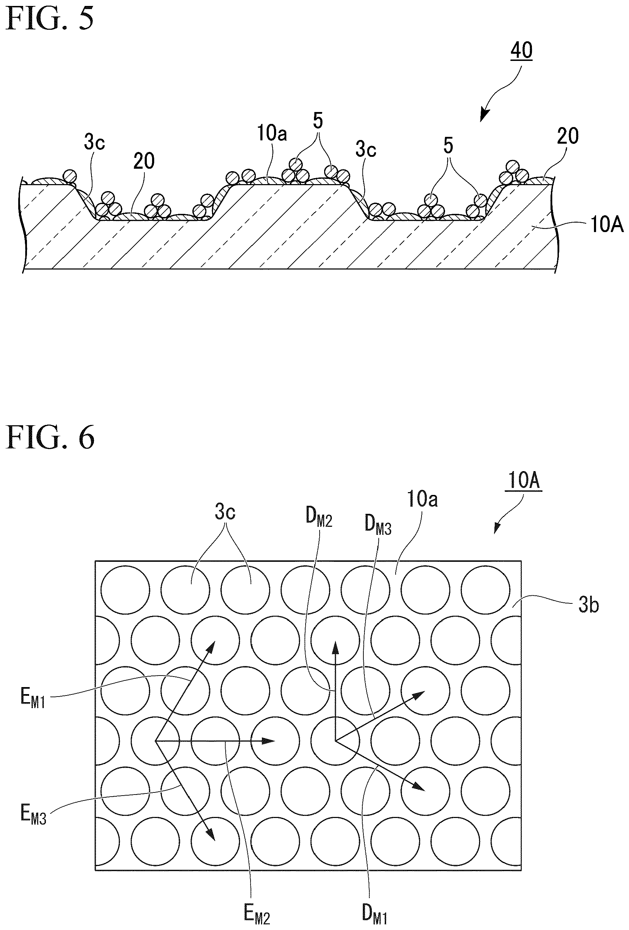

In the embodiment and the first and the second modified example described above, a base 10A including the first surface 10a that includes a substantially periodic recess and protrusion structure may be used instead of the base 10. Fig. 5 illustrates an example of a case in which the base 10A is used in place of the base 10 in the second modified example. In the case of Fig. 5, the metal film 20 is formed on the first surface 10a of the base 10A, and the metal nanoparticles 5 are dispersed on the metal film 20.

An aspect in which the metal nanoparticles 5 are omitted from Fig. 5 illustrates the cases where the base 10A is used instead of the base 10 for the embodiment and the first modified example described above.

When the base 10A is used, the substantially periodic recess and protrusion structure of the first surface 10a is reflected on the surface of the metal film 20. As a result, the surface of the metal film 20 has a recess and protrusion structure with the first protrusion, the second protrusion, and the like overlapping with the recess and protrusion structure that is following the substantially periodic recess and protrusion structure of the first surface 10a.

This "following" indicates that the position of the protrusion or recess in the substantially periodic recess and protrusion structure of the surface of the metal film 20 substantially matches the position of the protrusion or the recess in the substantially periodic recess and protrusion structure of the first surface 10a of the base 10A.

Note that when the first surface 10a of the base 10A has the substantially periodic recess and protrusion structure, the "surface height distribution on the side provided with the metal film" is a distribution of heights excluding height variation due to the substantially periodic recess and protrusion structure.

When the surface of the metal film 20 has the recess and protrusion structure overlapping the substantially periodic recess and protrusion structure, and when the metal film 20 is a semi-continuous conductive film having a low sheet resistance, the metal film 20 including the protrusion 21 and the protrusion 22 formed on the first surface 10a of the base 10A having the substantially periodic recess and protrusion structure enables the electric field enhancement to be generated by the localized surface plasmon as well as propagating surface plasmon resonance. The superimposition of the electric fields by the localized surface plasmon and the electric fields of the propagating surface plasmon can offer an even stronger electric field enhancement effect.

In order for the metal film 20 to be a semi-continuous conductive film having a low sheet resistance, the first protrusion is preferably a protrusion that has a mountain shape.

The propagating surface plasmon on the metal surface is propagation of compressional waves on the surface of free electrons continuously produced by light (excitation light such as laser used in Raman spectroscopy for example) incident on the metal surface while entailing surface electromagnetic field. When the metal surface is flat, dispersion curve of the surface plasmon present on the metal surface does not intersect with the dispersion line of light, and thus no propagating surface plasmon resonance occurs. When there is the substantially periodic recess and protrusion structure on the metal surface, the dispersion curve of the surface plasmon intersects with the dispersion line of light (diffracted light) diffracted by the substantially periodic recess and protrusion structure, whereby the propagating surface plasmon resonance occurs.

To induce the propagating surface plasmon on the metal film 20, the sheet resistance of the surface of the metal film 20 at 25°C is smaller the better. Specifically, the resistance is preferably $3 \times 10^0$ to $5 \times 10^4$ $\Omega/\square$, is more preferably $3 \times 10^0$ to $5 \times 10^3$ $\Omega/\square$, and is even more preferably $3 \times 10^0$ to $5 \times 10^2$ $\Omega/\square$, and is particularly preferably $3 \times 10^0$ to $3 \times 10^2$ $\Omega/\square$. The sheet resistance of the metal film 20 in these ranges indicate that the metal film 20 is a semi-continuous film that may include a no-film formed region but is not completely segmented. The sheet resistance of the metal film 20 within these range also indicates that the no-film formed region may be present but the width of the no-film formed region is in a range of 0.1 to 15 nm, which can be further limited to 0.1 to 10 nm and can be even further limited to 0.1 to 5 nm.

When the metal film 20 is a discontinuous film (for example, a film constituted by a plurality of dispersed metal films having an island shape), the sheet resistance of the surface should not be 5000 $\Omega/\square$ or less. With the metal film 20 being a semi-continuous film as a whole despite the no-film formed region included, the propagating surface plasmon described above can be induced on the metal film 20, whereby the nonlinear optical effect is likely to be obtained by the superimposition of the surface electric fields.

Note that the sheet resistance ($\Omega/\square$) of the metal film 20 is a value at 25°C. Specifically, the sheet resistance is an electrical resistance value ($\Omega$) in a case where a current flows from one end to the opposite end of a square region of the metal film 20 with a certain size under the conditions of 25°C.

Here, "periodic recess and protrusion structure" refers to a structure in which a plurality of protrusions and recesses are periodically arranged one dimensionally or two dimensionally. The one dimensional arrangement is obtained with a plurality of protrusions or recesses are arranged in a single direction. The two dimensional arrangement is obtained with a plurality of protrusions or recesses arranged in at least two direction on a same single plane.

Furthermore, "substantially periodic recess and protrusion structure" refers to a periodic recess and protrusion structure or a periodic but somewhat irregular recess and protrusion structure.

An example of a structure in which a plurality of protrusions or recesses are one dimensionally arranged (one dimensional lattice structure) includes a plurality of grooves (recesses) and ridges (protrusions) are arranged in parallel to each other (line and space structure). The shape of the cross section of the groove or the ridge orthogonal to the extending direction of the groove or the ridge may be, for example, a polygonal shape such as a triangle, a rectangle, or a trapezoid, a U shape, or a shape derived from these as a base.

The structure (two-dimensional lattice structure) in which a plurality of protrusions or recesses are periodically arranged two dimensionally includes a square lattice structure defined by two arrangement directions with the directions crossing each other at an angle of 90°, a triangular lattice (also known as a hexagonal lattice) defined by three arrangement directions with the directions crossing each other at an angle of 60°. Examples of the shape of the protrusions forming the two-dimensional lattice structure include a column shape, a cone shape, a frustoconical shape, a sine wave shape, a hemispherical shape, an approximately hemispherical shape, an ellipsoidal shape, or a shape derived from these as a base. The shape of the recesses forming the two-dimensional lattice structure may be a shape of inverting the shape of the protrusion described above, for example.

A larger number of arrangement directions leads to more conditions for obtaining diffracted light and the highly efficient induction of the propagating surface plasmon resonance. Thus, the periodic recess and protrusion structure is preferably a two-dimensional lattice structure such as a square lattice structure or a triangular lattice structure, and is more preferably a triangular lattice structure.

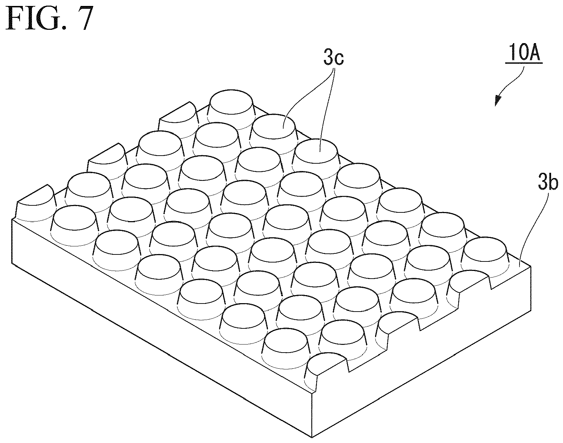

Figs. 6 and 7 illustrate examples of the periodic recess and protrusion structure on the first surface 10a of the base 10A of this modified example. In the figures, a plurality of frustoconical protrusions 3c are arranged in a triangular lattice pattern, with a substantially flat surface 3b provided between the protrusions 3c.

The height of the protrusion 3c is preferably 15 to 150 nm, and is more preferably 30 to 80 nm. When the height of the protrusion 3c is equal to or higher than the lower limit values of these ranges, the periodic recess and protrusion structure on the surface of the metal film 20 reflecting the recess and protrusion structure can sufficiently function as the diffraction grating, whereby the propagating surface plasmon resonance can be induced. The height of the protrusion is preferably equal to or lower than the upper limit values of these ranges, so that the propagation of the propagating surface plasmon can be facilitated.

The preferred height is approximately the same for the protrusions 3c with other shapes. When the first surface 10a of the base 10A includes the substantially periodic recess and protrusion structure formed by a plurality of recesses, the preferable depth of the recesses is substantially the same as the preferable height of the protrusions 3c. More specifically, the optimum value of the height of the protrusion 3c is determined by the volume fraction and permittivity of the protrusion 3c interacting with the electromagnetic field by the surface plasmon.

The height of the protrusion 3c is obtained by measuring a vertical distance from the center point at an equal distance from three adjacent protrusions as a starting point to an average value of the top surfaces of the three frustoconical protrusions, by using an atomic force microscope (AFM) or the like. The distance is measured using the substantially periodic recess and protrusion structure surfaces at five portions separated from each other by 100 $\mu$m or more. A 5 $\mu$m $\times$ 5 $\mu$m AFM image is acquired for these five measurement regions, and the depth at the center of the three points in nine locations randomly extracted from each of the AFM images is measured. The AFM probe may involve anisotropy in the image depending on the scanning direction. Thus, profile images are created in three directions $D_{M1}$ to $D_{M3}$, and the measurement is performed at measurement points of three locations in each direction totally nine locations, as illustrated in Fig. 6. The average value of the measurement values obtained at the measurement points of nine locations is used as the measurement value of one measurement region. This measurement value is similarly obtained in five measured regions. The measurement values of the five measurement regions are averaged to obtain the height of the protrusion 3c.

$D_{M1}$ to $D_{M3}$ are a direction respectively substantially orthogonal to three respective arrangement directions $E_{M1}$ to $E_{M3}$ of the protrusions 3c on the first surface 10a (the actual lattice arrangement includes some distortions and thus the directions are not necessarily orthogonal).

The height of the protrusions or the depth of the recesses having other shapes are also measurable by the same measurement method.

The pitch of the protrusions 3c is obtained by measuring the distance between the center points of the two adjacent frustoconical protrusions in the horizontal direction using atomic force microscope (AFM) or the like. The distance is measured using the substantially periodic recess and protrusion structure surfaces at five portions separated from each other by 100 $\mu$m or more. A 5 $\mu$m $\times$ 5 $\mu$m AFM image is acquired for these five measurement regions, and the distance between the two points in nine locations randomly extracted from each of the AFM images is measured. The AFM probe may involve anisotropy in the image depending on the scanning direction. Thus, profile images are created in three directions $E_{M1}$ to $E_{M3}$, and the measurement is performed at measurement points of three locations in each direction totally nine locations, as illustrated in Fig. 6. The average value of the measurement values obtained at the measurement points of nine locations is used as the measurement value of one measurement region. The measurement values of the five measurement regions are averaged to obtain the pitch of the protrusions 3c.

The pitch of the protrusions or the recesses having other shapes are also measurable by the same measurement method.

The pitch A of the protrusions 3c in the arrangement direction of the protrusions 3c is designed to correspond to a wavelength $\lambda_i$ of the incident light (excitation light). A wavenumber $k_{spp}$ of the surface plasmon is schematically obtained by the following Formula 1:

$$k_{spp} = k_i((\varepsilon_1 \times \varepsilon_2)/(\varepsilon_1 + \varepsilon_2))^{0.5} \text{ (Formula 1)},$$

where $k_i$ ($k_i = 2\pi/\lambda_i$) represents the wavenumber of the incident light, $\varepsilon_1$ represents the real part of relative permittivity of metal in the case of ki, and $\varepsilon_2$ represents the real part of the relative permittivity of a specimen including the measurement target molecule.

The wavelength $\lambda_{spp}$ of the surface plasmon is the inverse of $k_{spp}$ and the protrusions 3c are arranged in a triangular lattice. Thus, the pitch A of the protrusion 3c is expressed by the following Formula 2:

$$\Lambda = (2/\sqrt{3}) \times \lambda_{spp} \text{ (Formula 2)}.$$

Formula 1 and Formula 2 are commonly used formulae.

According to the calculation described above, for example, $k_{spp}$ = 11.8 $\mu$m$^{-1}$, A = 655 nm holds when the wavelength $\lambda_i$ of the incident light is 785 nm, the metal film 20 formed on the first surface 10a is made of gold (Au), and the specimen is aqueous solution including the measurement target molecule ($\varepsilon_2 \approx 1.33$). Similarly, for example, $k_{spp}$ = 16.6 $\mu$m$^{-1}$, A = 438 nm holds when the wavelength $\lambda_i$ of the incident light is 633 nm, the metal film 20 formed on the first surface 10a is made of gold (Au), and the specimen is organic dry material ($\varepsilon_2 \approx 2.25$). When a laser beam is used for incident light, because its wavelength distribution is extremely narrow, practically, it suffices if the protrusions 3c are produced at a pitch close to the pitch A described above as much as possible.

When the two-dimensional lattice arrangement is a square lattice or in case of a one-dimensional lattice arrangement (line and space), the following Formula 3 may be used instead of Formula (2):

$$\Lambda = \lambda_{spp} \text{ (Formula 3)}.$$

Laser light sources, used for providing the incident light, support various wavelengths such as 785, 633, 532, 515, 488, and 470 nm. Generally, as a type of metal forming the metal film 20, gold (Au) is preferably used for a light source having a wavelength greater than approximately 500 nm and silver (Ag) is preferably used for a light source having a wavelength shorter than approximately 500 nm. Both gold and silver can be used for a wavelength of 500 nm. The propagating surface plasmon can also be obtained with a type of metal other than gold and silver. Thus, when a type of metal other than gold or silver is used, calculation may be made using Formulae 1 to 3 as appropriate using the relative permittivity of the metal used.

The pitch of the substantially periodic recess and protrusion structure is preferably 160 to 1220 nm, is more preferably 200 to 800 nm, and is even more preferably 250 to 600 nm.

The preferred pitch is the same for the protrusions 3c with other shapes. When the periodic recess and protrusion structure of the surface of the base 10A is made of a plurality of recesses, the preferable pitch of the recesses in the arrangement direction of the recesses is similar to the preferable pitch of the protrusions 3c.

For the metal film to function as a semi-continuous film that may induce the propagating surface plasmon, the sheet resistance of the metal film surface is preferably 3 $\times$ 10$^0$ to 5 $\times$ 10$^4$ $\Omega/\square$, is more preferably 3 $\times$ 10$^0$ to 5 $\times$ 10$^3$ $\Omega/\square$, and is even more preferably 3 $\times$ 10$^0$ to 5 $\times$ 10$^2$ $\Omega/\square$, and is particularly preferably 3 $\times$ 10$^0$ to 3 $\times$ 10$^2$ $\Omega/\square$. The

sheet resistance of the surface of the metal film in these ranges indicates that the metal film may include the no-film formed region but is a continuous film that is not completely segmented.

Note that the sheet resistance ($\Omega/\square$) of the surface of the metal film is a value at 25°C. Specifically, the sheet resistance is an electrical resistance value ($\Omega$) in a case where a current flows from one end to the opposite end of a square region of the surface of the metal film with a certain size under the conditions of 25°C. Details will be described in Examples below.

For the metal film to be overlapped on the substantially periodic recess and protrusion structure of the base and to be a semi-continuous film with a low sheet resistance, the base 10A including the first surface 10a provided with the substantially periodic recess and protrusion structure may be used as the base, and (i) first film formation step and (ii) first heating step, (iii) second film formation step and (iv) second heating step, and/or (v) third film formation step and (vi) third heating step described above may be performed as in a case where the first surface 10a is flat.

The third modified example may be further applied to the second modified example by performing (i) first film formation step and (ii) first heating step, (iii) second film formation step and (iv) second heating step, and/or (v) third film formation step and (vi) third heating step described above on the base 10A, and then coating the metal film including the recess and protrusion structure with metal nanoparticle dispersion liquid in which the metal nanoparticles are dispersed, and then drying as in the second modified example.

Still, in any of these cases, the metal film 20 needs to function as a semi-continuous film that may induce the propagating surface plasmon, by making the first protrusions to have a mountain shape. Thus, the heating temperature and the heating time in the first heating step need to be prevented from being excessively high and long, respectively.

Examples

The present invention will be further described in detail using examples; however, the present invention is not limited to these examples.

(Surface height distribution)

The surface height distribution on the side where the metal film is provided was determined as follows.

First, the metal film at a certain location on the analytical substrate was peeled off to expose the base surface. AFM images of $\square$500 nm were obtained partially including portions where the base was exposed.

As AFM images, MultiMode8-HR (probe: SCANASYST-AIR) from Bruker AXS was used for measurement at a scan speed of 1 Hz in tapping mode. The measurement points were set to $256 \times 256$ points, and the height step was set in 512 steps.

Correction using a second order polynomial was made on both the X direction and the Y direction, and the inclination and bow-shape warpage of the base surface were removed. Specifically, the Plane Fit function of the AFM data analysis software Nanoscope Analysis (from Bruker AXS) was used, the direction in which the correction was made was "XY", and the polynomial used for the correction was 2nd.

The acquisition location of AFM images of $\square$500 nm was varied to obtain a distribution curve of n = 3, and the mean value was taken as data.

(SEM pictures)

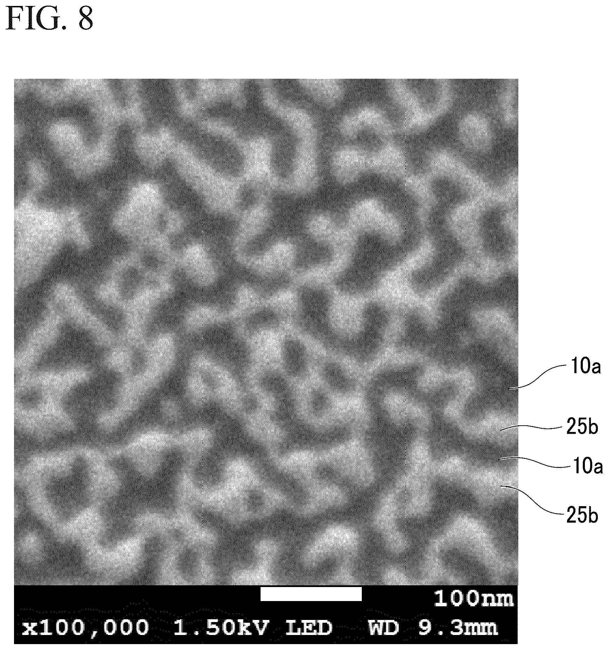

Scanning electron microscope (SEM) images were acquired in a region of 1.18 $\mu$m $\times$ 0.88 $\mu$m at a magnification of 100000 times using a JSM-7800F manufactured by JEOL Ltd. Note that Figs. 8, 9, 11, and 113 are portions of the acquired images.

(Thickness of metal films formed in film formation steps)

The thickness of a metal film formed in a first film formation step was determined as follows. After the first film formation step, very thin scratches were made by the tip of a sharp knife on the metal film formed on the base, and a region including the scratches was measured with a stylus step meter (Microfigure Measuring Instrument ET4000A, available from Kosaka Laboratory Ltd.). The height difference between the bottom surface of the scratches (where the base was exposed) and the surface of the metal film was measured at 10 points in a range of 500 nm $\times$ 500 nm, and the average value was determined.

The thickness of a metal film formed in the second film formation step was estimated to be the same as the thickness of the metal film measured after the first film formation step, with the condition that the film was formed under the same conditions as in the first film formation step.

(Sheet resistance of metal film surface)

Sheet resistance measurement was performed at 25°C using a resistivity meter (Loresta AX MCP-T370) that is used in general continuity tests. Since the metal film constituting a metal structure was very thin, a PSP option probe (MCP-TP06P) having a pin-to-pin pitch of 1.5 mm for thin-film measurement was used as a probe for the resistivity meter, and measurement values ($\Omega$/□) were obtained using an average value of n = 5 or more.

(Measurement of Raman scattering intensity with 4,4'-bipyridyl aqueous solution)

To the surface of an analytical substrate (surface provided with a metal film), 5 $\mu$L of a 4,4'-bipyridyl aqueous solution with a concentration of 100 $\mu$M was dropped, and Raman spectra were measured using a Raman spectrophotometer (Almega XR, available from Thermo Fisher Scientific K.K.). The measurements were compared, using a laser with an excitation wavelength of 780 nm and an output power of 10 mW as a light source, with an intensity of detection peak at 1607 cm$^{-1}$.

The Raman conditions are 100% laser output power, pinholes with a 100 $\mu$m aperture diameter, 64 exposure times.

(Measurement of Raman scattering intensity with 4,4'-bipyridyl solution)

To the surface of an analytical substrate (surface provided with a metal film), 5 $\mu$L of a 4,4'-bipyridyl solution with a concentration of 100 $\mu$M was dropped, and Raman spectra were measured using a Raman spectrophotometer (Almega XR, available from Thermo Fisher Scientific K.K.). The measurements were compared, using a laser with an excitation wavelength of 780 nm and an output power of 10 mW as a light source, with an intensity of detection peak at 1607 cm$^{-1}$.

The Raman conditions included 100% laser output power, pinholes with a 100 $\mu$m aperture diameter, 64 exposure times.

Comparative Example 1

Following the procedures in Figs. 3(a) to 3(c), an analytical substrate of Comparative Example 1, serving as a precursor of an analytical substrate of Example 1 described below, was obtained under the conditions listed in Table 1.

Specifically, a sputtering apparatus (ion sputter apparatus E-1030, available from Hitachi High-Tech Corporation) was used to form an Au thin film serving as the base 10 in a □300 mm range on a clean and flat quartz base 1, at a pressure of 6 to 8 Pa, a current value of 15 mA, and a film formation rate of 11.6 nm/min for 30 minutes, and a flat metal film having a thickness of 7 nm was formed (first film formation step). Thereafter, heat treatment was performed at 300°C for 14 minutes in an argon gas atmosphere at atmospheric pressure to obtain the analytical substrate of Comparative Example 1 (first heating step).

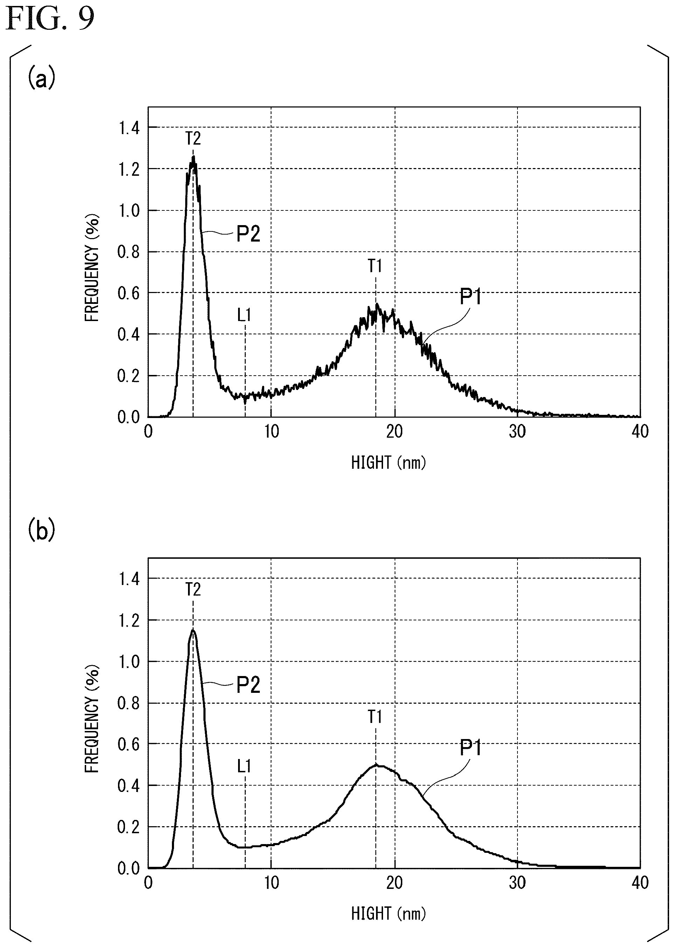

A portion of a SEM image of the obtained analytical substrate of Comparative Example 1 is illustrated in Fig. 8. The surface height distribution is illustrated in Fig. 9. In Fig. 9, Fig. 9(a) represents raw data with a frequency obtained by dividing the height direction at 0.6 nm intervals, and Fig. 9(b) is a moving average curve that is the moving average of 15 pieces of the raw data.

The average width of the first protrusion region approximately determined from the SEM image (Fig. 8), as well as the mode heights T1 and T2 and the height level L1 read from Fig. 9(b) are listed in Table 2. Note that no mode height T3 appeared.

Table 2 also lists the results of measuring Raman scattering intensity using 4,4'-bipyridyl solution, and sheet resistance, at 25°C, of the metal film surface of the obtained analytical substrate.

Example 1

A precursor was obtained in the same manner as in Comparative Example 1 following the procedures in Figs. 3(a) to 3(c). An analytical substrate of Example 1 was then obtained following the procedures in Figs. 3(d) and 3(e).

In other words, an Au thin film was formed to the precursor with a uniform thickness on the entirety of the cohered metal film and portions where the first surface 10a of the base was exposed due to cohesion, under the same conditions as in the first film formation step (second film formation step). Thereafter, heat treatment was performed at 150°C for 5 minutes in an argon gas atmosphere at atmospheric pressure to obtain the analytical substrate of Example 1 (second heating step).

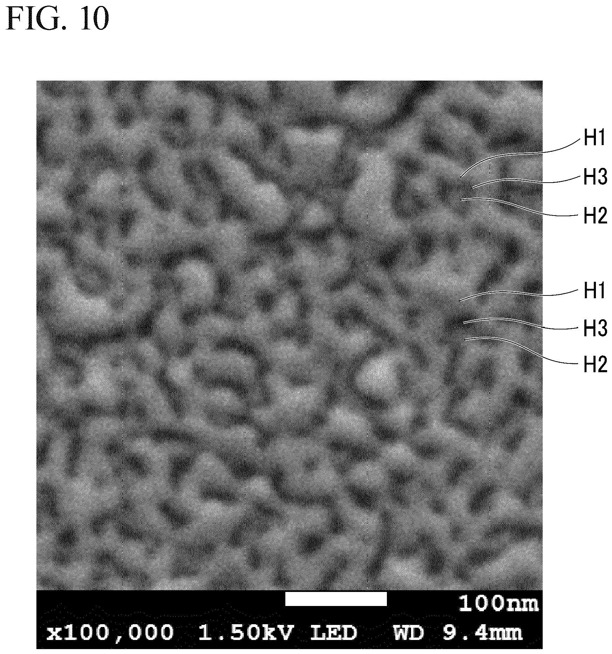

A portion of a SEM image of the obtained analytical substrate is illustrated in Fig. 10, and the surface height distribution is illustrated in Fig. 11. In Fig. 11, Fig. 11(a) represents raw data with a frequency obtained by dividing the height direction at 0.6 nm intervals, and Fig. 11(b) is a moving average curve that is the moving average of 15 pieces of the raw data.

The average width of the first protrusion region approximately determined from the SEM image (Fig. 10), as well as the mode heights T1, T2 and T3 and the height levels L1 and L2 read from Fig. 11(b) are listed in Table 2. Table 2 also lists the results of measuring Raman scattering intensity using 4,4'-bipyridyl solution, and sheet resistance, at 25°C, of the metal film surface of the obtained analytical substrate.

Comparative Example 2

An analytical substrate of Comparative Example 2, serving as a precursor of an analytical substrate of Example 2 described below, was obtained in the same manner as in Comparative Example 1, except that the time for the first heating step was changed as in Table 1.

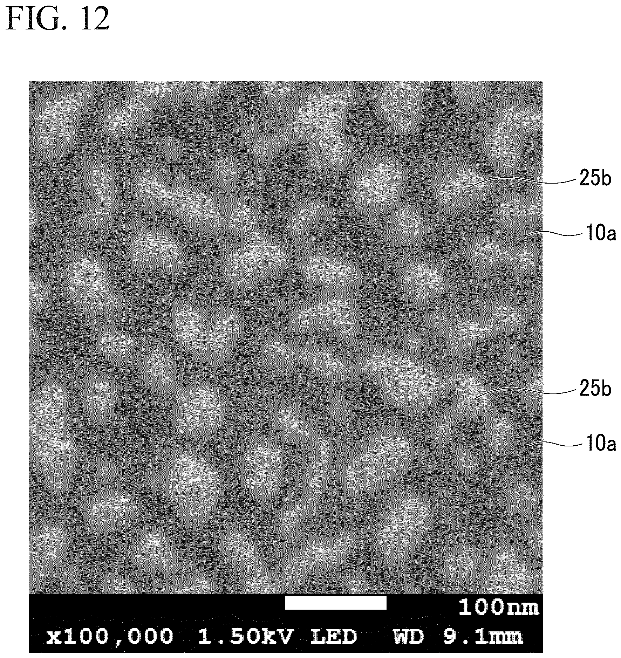

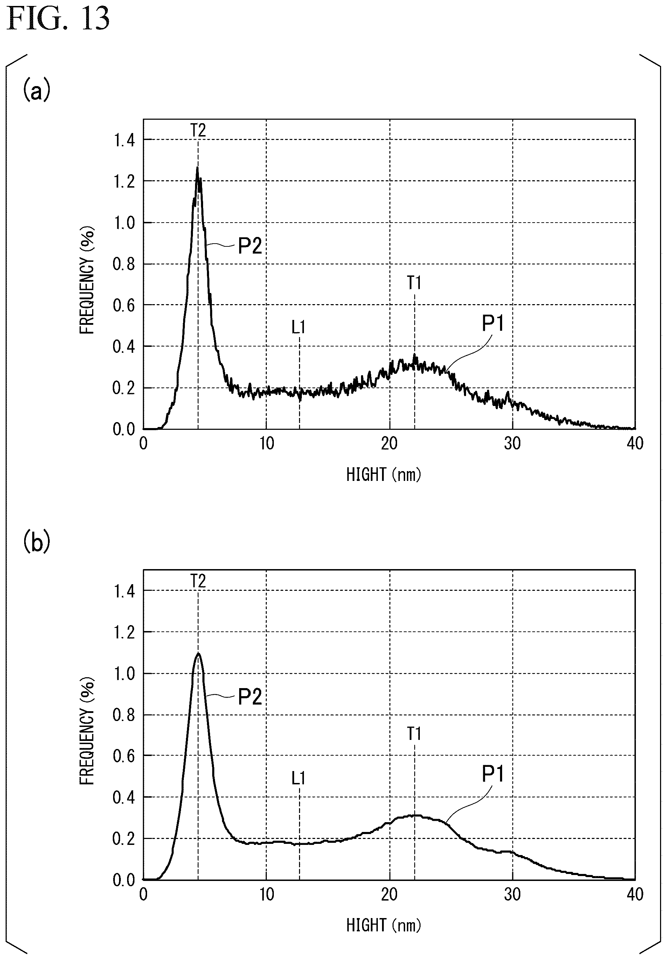

A portion of a SEM image of the obtained analytical substrate of Comparative Example 2 is illustrated in Fig. 12. The surface height distribution is illustrated in Fig. 13. In Fig. 13, Fig. 13(a) represents raw data with a frequency obtained by dividing the height direction at 0.6 nm intervals, and Fig. 13(b) is a moving average curve that is the moving average of 15 pieces of the raw data.

The average width of the first protrusion region approximately determined from the SEM image (Fig. 12), as well as the mode heights T1 and T2 and the height level L1 read from Fig. 13(b) are listed in Table 2. Note that no mode height T3 appeared.

Table 2 also lists the results of measuring Raman scattering intensity using 4,4'-bipyridyl solution, and sheet resistance, at 25°C, of the metal film surface of the obtained analytical substrate.

Example 2

An analytical substrate of Example 2 was obtained in the same manner as in Example 1, except that the precursor was obtained in the same manner as in Comparative Example 2.

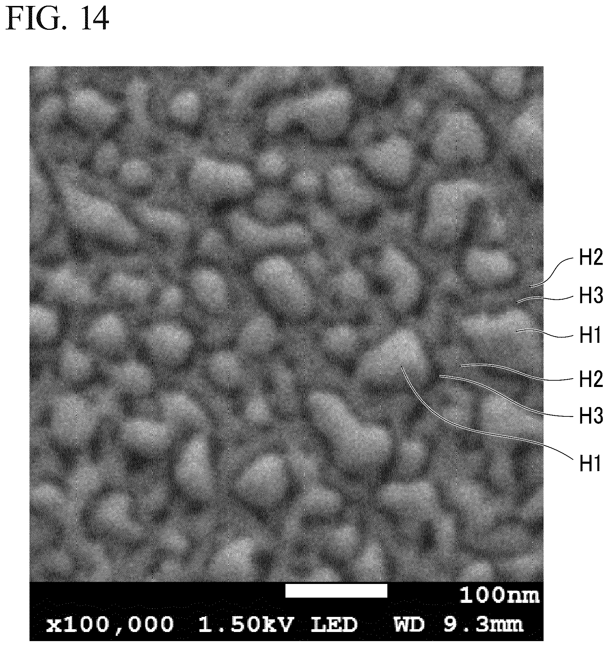

A SEM image of the obtained analytical substrate is illustrated in Fig. 14, and the surface height distribution is illustrated in Fig. 15. In Fig. 15, Fig. 15(a) represents raw data with a frequency obtained by dividing the height direction at 0.6 nm intervals, and Fig. 15(b) is a moving average curve that is the moving average of 15 pieces of the raw data.

The average width of the first protrusion region approximately determined from the SEM image in Fig. 14, as well as the mode heights T1, T2 and T3 and the height levels L1 and L2 read from Fig. 15(b) are listed in Table 2. Table 2 also lists the results of measuring Raman scattering intensity using 4,4'-bipyridyl solution, and sheet resistance, at 25°C, of the metal film surface of the obtained analytical substrate.

Example 3

Colloidal silica particles having a particle size of 630 nm were single-layer coated on a quartz base by the LB method described below. First, N-phenyl-3-aminopropyltrimethoxysilane as a hydrophobizing agent was added to silica particle slurry, and hydrophobization was performed at a reaction temperature of 40°C. The hydrophobized silica particles were then oil-layer extracted using a mixed solvent of ethanol:chloroform = 30:70. Next, the hydrophobized particle slurry was dropped to the water surface of lower-layer water of pH 7.2 at 21°C, and a particle monolayer film was formed on the water surface. Furthermore, while compressing the particle monolayer film by a barrier, a clean and flat quartz base pre-immersed in water was gradually raised at 5 mm/min, and the particle monolayer film on the water surface was transferred onto the quartz base. Thereafter, dry etching was performed using a dry etching apparatus (ME510I manufactured by Tokyo Electron Limited) under conditions of 1.2 Pa, 2000/1800 W, C12 = 80 sccm, and 100 sec.

As a result, similarly to that illustrated in Figs. 6 and 7, a quartz base 2 was obtained including a substantially periodic recess and protrusion structure with a structure cycle (pitch) of 630 nm in which a plurality of frustoconical-shaped protrusions 3c are arranged in a triangular lattice pattern, and a structural height (vertical distance from the center point of three particles to the top portion of the structure) of 60 nm.

An analytical substrate of Example 3 was obtained in the same manner as in Example 1, except that the quartz base 2 was used in place of the quartz base 1 as the base 10.

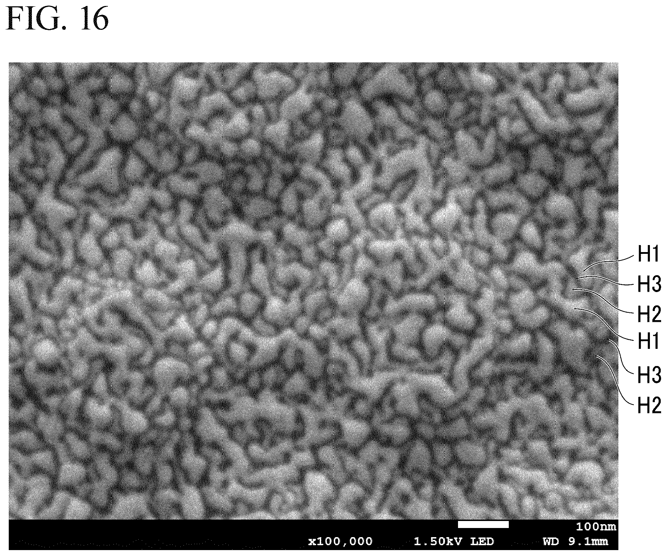

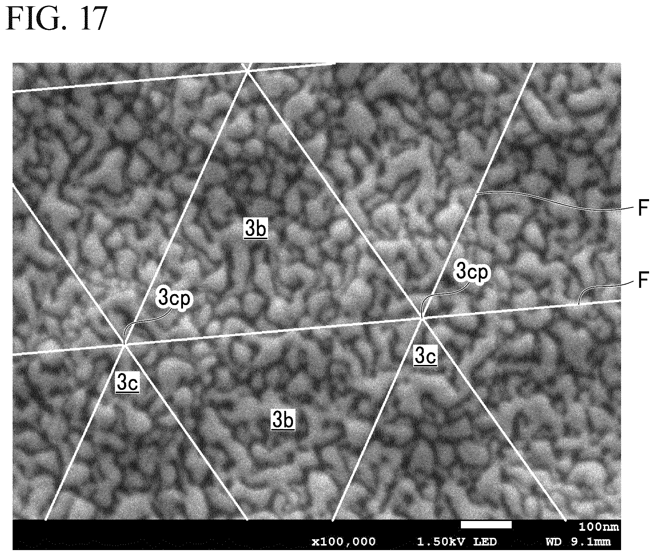

A SEM image of the obtained analytical substrate is illustrated in Fig. 16. Fig. 17 is a view in which auxiliary lines F are added to Fig. 16 to clearly recognize the positions where the substantially periodic recess and protrusion structure of the quartz base 2 are reflected.

The average width of the first protrusion region approximately determined from Fig. 16, as well as the mode heights T1, T2 and T3 and the height levels L1 and L2 read from the moving average curve that is the moving average of 15 pieces of the raw data of the surface height distribution are listed in Table 2. Table 2 also lists the results of measuring Raman scattering intensity using 4,4'-bipyridyl solution, and sheet resistance, at 25°C, of the metal film surface of the obtained analytical substrate.

Example 4

By repeating three times a step of spraying coating and drying an Au nanoparticle dispersion liquid (particle size 20 nm) on the metal film surface of the analytical substrate of Example 2, Au nanoparticles were dispersed at a spraying density of 46 particles/□1 μm to obtain an analytical substrate of Example 4.
The average width of the first protrusion region, the mode heights T1, T2 and T3, and the height levels L1 and L2 are the same as those of the analytical substrate of Example 2, as listed in Table 2.
Table 2 also lists the results of measuring Raman scattering intensity using 4,4'-bipyridyl solution, and sheet resistance, at 25°C, of the metal film surface of the obtained analytical substrate.

Example 5

By repeating three times a step of spraying coating and drying an Au nanoparticle dispersion liquid (particle size 20 nm) on the metal film surface of the analytical substrate of Example 3, Au nanoparticles were dispersed at a spraying density of 43 particles/□1 μm to obtain an analytical substrate of Example 5.
The average width of the first protrusion region, the mode heights T1, T2 and T3, and the height levels L1 and L2 are the same as those of the analytical substrate of Example 3, as listed in Table 2.
Table 2 also lists the results of measuring Raman scattering intensity using 4,4'-bipyridyl solution, and sheet resistance, at 25°C, of the metal film surface of the obtained analytical substrate.

Example 6

An analytical substrate of Example 6 was obtained in the same manner as in Example 1, except that the second heating step was not performed.
The average width of the first protrusion region approximately determined from a SEM image of the obtained analytical substrate, as well as the mode heights T1, T2 and T3 and the height levels L1 and L2 read from the moving average curve that is the moving average of 15 pieces of the raw data of the surface height distribution are listed in Table 2. Table 2 also lists the results of measuring Raman scattering intensity using 4,4'-bipyridyl solution, and sheet resistance, at 25°C, of the metal film surface of the obtained analytical substrate.

Comparative Example 3

A flat metal film (Au) with a thickness of 7 nm was formed on a flat quartz base 1 serving as the base 10 in the same manner as in the first film formation step of Example 1, and an analytical substrate of Comparative Example 1 was obtained.
Table 2 also lists the results of measuring Raman scattering intensity using 4,4'-bipyridyl solution, and sheet resistance, at 25°C, of the metal film surface of the obtained analytical substrate.

Comparative Example 4

An analytical substrate of Comparative Example 2 was obtained in the same manner as in Comparative Example 3, except that the quartz base 2 having a substantially periodic recess and protrusion structure was used in place of the quartz base 1 as the base 10.
Table 2 also lists the results of measuring Raman scattering intensity using 4,4'-bipyridyl solution, and sheet resistance, at 25°C, of the metal film surface of the obtained analytical substrate.

Comparative Example 5

By repeating three times a step of spraying coating and drying an Au nanoparticle dispersion liquid (particle size 20 nm) on the metal film surface of the analytical substrate of Comparative Example 3, Au nanoparticles were dispersed at a spraying density of 45 particles/□1 μm to obtain an analytical substrate of Comparative Example 3.
Table 2 also lists the results of measuring Raman scattering intensity using 4,4'-bipyridyl solution, and sheet resistance, at 25°C, of the metal film surface of the obtained analytical substrate.

Comparative Example 6

A flat quartz base 1 was used as it is for an analytical substrate of Comparative Example 6.

The sheet resistance at 25°C of the metal film surface of this analytical substrate is infinite as listed in Table 2, and the Raman scattering intensity measurement results using a 4,4' bipyridyl solution is less than the detection limit as listed in Table 2.

Table 1

| | First film formation step | | First heating step | | Second film formation step | | Second heating step | |
|---|---|---|---|---|---|---|---|---|
| | Time min | Film formation thickness nm | Temperature °C | Time min | Time min | Film formation thickness nm | Temperature °C | Time min |
| Comparative Example 1 | 30 | 7 | 300 | 14 | - | - | - | - |
| Example 1 | 30 | 7 | 300 | 14 | 30 | 7 | 150 | 5 |
| Comparative Example 2 | 30 | 7 | 300 | 18 | - | - | - | - |
| Example 2 | 30 | 7 | 300 | 18 | 30 | 7 | 150 | 5 |
| Example 3 | 30 | 7 | 300 | 14 | 30 | 7 | 150 | 5 |
| Example 4 | 30 | 7 | 300 | 18 | 30 | 7 | 150 | 5 |
| Example 5 | 30 | 7 | 300 | 14 | 30 | 7 | 150 | 5 |
| Comparative Example 3 | 30 | 7 | - | - | - | - | - | - |
| Comparative Example 4 | 30 | 7 | - | - | - | - | - | - |
| Comparative Example 5 | 30 | 7 | - | - | - | - | - | - |
| Comparative Example 6 | - | - | - | - | - | - | - | - |

[Table 2]

| | Average width of first protrusion region | Mode height T1 | Mode height T2 | Mode height T3 | Height level L1 | Height level L2 | Sheet resistance | Raman scattering intensity |
|---|---|---|---|---|---|---|---|---|
| | nm | nm | nm | nm | nm | nm | Ω/□ | Intensity@ 1607 cm$^{-1}$ |
| Comparative Example 1 | 21.0 | 18.4 | 3.6 | - | 7.9 | - | 5664.0 | 538.8 |
| Example 1 | 25.0 | 16.3 | 9.3 | 2.8 | 11.0 | 4.2 | 27.6 | 11596.8 |
| Comparative Example 2 | 38.0 | 21.9 | 4.4 | - | 12.9 | - | ∞ | Less than detection limit |
| Example 2 | 35.0 | 26.0 | 12.0 | 6.2 | 17.5 | 8.5 | 92.0 | 18556.9 |
| Example 3 | 25.0 | 16.3 | 9.3 | 2.8 | 11.0 | 4.2 | 24.8 | 54580.6 |
| Example 4 | 35.0 | 26.0 | 12.0 | 6.2 | 17.5 | 8.5 | 95.4 | 29431.2 |
| Example 5 | 25.0 | 16.3 | 9.3 | 2.8 | 11.0 | 4.2 | 90.8 | 67352.5 |

(continued)

| | Average width of first protrusion region | Mode height T1 | Mode height T2 | Mode height T3 | Height level L1 | Height level L2 | Sheet resistance | Raman scattering intensity |
|---|---|---|---|---|---|---|---|---|
| | nm | nm | nm | nm | nm | nm | Ω/□ | Intensity@ 1607 cm$^{-1}$ |
| Comparative Example 3 | - | - | - | - | - | - | 289.0 | 1103 |
| Comparative Example 4 | - | - | - | - | - | - | 272.0 | 1434 |
| Comparative Example 5 | - | - | - | - | - | - | 302.0 | 1233 |
| Comparative Example 6 | - | - | - | - | - | - | ∞ | Less than detection limit |

As illustrated in Figs. 8 and 12, in Comparative Examples 1 and 2, serving as the precursors of Examples, the metal film 25b cohered in the first heating step and the first surface 10a with the base 10 exposed are observed. In addition, the metal film 25b in Comparative Example 1 (precursor of Example 1) heated for 14 minutes in the first heating step is a mountain shape protrusion, whereas the metal film 25b of Comparative Example 2 (precursor of Example 2) heated for 18 minutes in the first heating step is an island shape protrusion.

In the precursor stage in Examples, the surface height distribution includes two peaks, as illustrated in Fig. 9 and Fig. 13. The lower peak reflects the height of the base surface, and the higher peak reflects the height of the surface of the metal film 25b.

As illustrated in Fig. 10, Fig. 14, and Fig. 16, in the analytical substrates of Examples, a first protrusion region HI, a second protrusion region H2, and a groove region H3 present between these protrusion regions are observed.

In addition, the first protrusion region HI of the analytical substrate of Example 1 heated for 14 minutes in the first heating step is a mountain shape region (Fig. 10), whereas the first protrusion region HI of the analytical substrate of Example 2 heated for 18 minutes in the first heating step is an island shape region (Fig. 14).

In Example 3, in which the quartz base 2 having a substantially periodic recess and protrusion structure is used, the substantially periodic recess and protrusion structure of the quartz base 2 is reflected as illustrated in Fig. 17. That is, the periphery of a portion 3cp where the auxiliary lines F intersect is a high height portion reflecting a protrusion 3c, and the center portion of the triangle surrounded by the auxiliary lines F is a low height portion reflecting a flat surface 3b between convex portions 3c.

As illustrated in Figs. 11 and 15 and Table 2, for the analytical substrates of Examples, the surface height distribution includes three peaks, and the mode height T1 at the peak P1, the mode height T2 at the peak P2, the mode height T3 at the peak P3, and the height level L1 and the height level L2 demarcating these peaks are observed.

The peak P1 reflects the height of a portion of the first protrusion region HI that is higher than the height level L1 in Fig. 1, the peak P2 reflects the height of a portion of the first protrusion region HI that is lower than the height level L1 and the height of the second protrusion region H2 in Fig. 1, and the peak P3 reflects the height of the groove region H3 in Fig. 1.

In addition, as listed in Table 2, in the precursor stage (Comparative Example 1 and Comparative Example 2), Raman scattering was not detected or only a low intensity was detected when Raman scattering was detected, whereas Raman scattering was sufficiently detected in the analytical substrates of Examples, which met the conditions of the present invention.

In addition, a higher intensity was obtained by further dispersing metal nanoparticles on the metal film 20 or by using a base having a substantially periodic recess and protrusion structure. The effect of enhancing intensity by dispersing metal nanoparticles and using a base having a substantially periodic recess and protrusion structure is extremely large compared to the cases where the metal film is flat (Comparative Example 4, Comparative Example 5).

Reference Signs List

10 Base

21, 22 Protrusion
21a, 22a Top portion
P1, P2, P3 Peak
L1, L2 Height level
HI First protrusion region
H2 Second protrusion region
H3 Groove region


**Claims**

1.  An analytical substrate comprising:

    a base including at least a first surface made of a dielectric or a semiconductor; and
    a metal film provided on the first surface of the base, wherein
    the metal film has a recess and protrusion structure including a plurality of protrusions being continuously or intermittently formed,
    a surface height distribution of a side provided with the metal film includes three or more peaks, and
    when, of the three or more peaks, a peak with a largest distance from the base is referred to as a first height peak, a peak with a second largest distance from the base is referred to as a second height peak, and a peak with a shortest distance from the base is referred to as a groove peak, and
    when, of the plurality of protrusions, a protrusion with a top portion at a height of the first height peak is referred to as a first protrusion, a protrusion with a top portion at a height of the second height peak is referred to as a second protrusion, and a region having a height of the groove peak is referred to as a groove region,
    the first protrusion is a protrusion having an island shape or a mountain shape, with an average value of a width of a portion excluding the groove region being 200 nm or less, and
    the groove region is provided between a circumference edge portion of the first protrusion and a circumference edge portion of the second protrusion or between the first protrusion and the second protrusion.

2.  The analytical substrate according to claim 1, wherein a difference between a mode height of the first height peak and a mode height of the second height peak is 5 to 60 nm.

3.  The analytical substrate according to claim 1 or 2, wherein a difference between a mode height of the second height peak and a mode height of the groove peak is 5 to 40 nm.

4.  The analytical substrate according to any one of claims 1 to 3, wherein a difference between a mode height of the first height peak and a mode height of the groove peak is 10 to 100 nm.

5.  The analytical substrate according to any one of claims 1 to 4 further comprising:

    a plurality of metal nanoparticles dispersed on the metal film, wherein
    an average primary particle size of the plurality of metal nanoparticles is 1 to 100 nm.

6.  The analytical substrate according to any one of claims 1 to 5, wherein
    the first surface of the base has a substantially periodic recess and protrusion structure,
    a pitch of the substantially periodic recess and protrusion structure is 160 to 1220 nm, and
    a sheet resistance of a surface of the metal film at 25°C is $3 \times 10°$ to $5 \times 10^4$ Ω/□.

FIG. 1

# FIG. 2

# FIG. 3

(a)

10a

10

(b)

25a

10

(c)

25b    25b    10a    25b

10

(d)

10a    25b    25b    26a    25b

10

(e)

21    21
26b 25b    26b(22)    26b(22)    26b 25b

10

FIG. 4

## FIG. 5

## FIG. 6

FIG. 7

FIG. 8

10a
25b
10a
25b

100nm

x100,000  1.50kV  LED    WD  9.3mm

# FIG. 9

(a)

(b)

FIG. 10

# FIG. 11

(a)

(b)

FIG. 12

# FIG. 13

(a)

(b)

FIG. 14

FIG. 15

(a)

(b)

FIG. 16

FIG. 17

## INTERNATIONAL SEARCH REPORT

| International application No. |
| --- |
| PCT/JP2019/035765 |

**A.    CLASSIFICATION OF SUBJECT MATTER**

Int.Cl. G01N21/65(2006.01)i, G01N21/41(2006.01)n

According to International Patent Classification (IPC) or to both national classification and IPC

**B.    FIELDS SEARCHED**

Minimum documentation searched (classification system followed by classification symbols)

Int.Cl. G01N21/00-21/01, G01N21/17-21/74

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2013-33000 A (SEIKO EPSON CORP.) 14 February 2013, paragraphs [0002], [0022], [0023], [0033], [0050]-[0054], fig. 1, 8 (Family: none) | 1-4<br>5-6 |
| Y | US 2011/0267607 A1 (HU, Min) 03 November 2011, paragraphs [0015], [0027], fig. 3 (Family: none) | 5-6 |

☒   Further documents are listed in the continuation of Box C.          ☐   See patent family annex.

| | | |
| --- | --- | --- |
| *    Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
| --- | --- |
| 18 October 2019 (18.10.2019) | 05 November 2019 (05.11.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/035765 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2018-132340 A (TOYO UNIVERSITY) 23 August 2018, fig. 7(c) (Family: none) | 5-6 |
| Y | JP 2003-510607 A (ARRAY BIOSCIENCE CORPORATION) 18 March 2003, paragraph [0068] & WO 2001/023888 A1, page 23, lines 4-5 | 6 |
| A | JP 2016-136138 A (COMMISSARIAT À L'ENERGIE ATOMIQUE ET AUX ENERGIESALTERNATIVES) 28 July 2016 & US 2016/0195475 A1 & EP 3040710 A1 | 1-6 |
| P, Y | WO 2019/146700 A1 (OJI HOLDINGS CORPORATION) 01 August 2019 (Family: none) | 5-6 |
| P, Y | WO 2019/146692 A1 (OJI HOLDINGS CORPORATION) 01 August 2019 (Family: none) | 5-6 |

Form PCT/ISA/210 (continuation of second sheet) (January 2015)

**REFERENCES CITED IN THE DESCRIPTION**

**Patent documents cited in the description**

- JP 2018170543 A
- JP 2015232526 A
- JP 2015212626 A